(19) Europäisches Patentamt
European Patent Office
Office européen des brevets

(11) **EP 4 682 607 A1**

(12) **EUROPEAN PATENT APPLICATION**
published in accordance with Art. 153(4) EPC

(43) Date of publication:
**21.01.2026 Bulletin 2026/04**

(51) International Patent Classification (IPC):
**G02B 9/64** (2006.01)

(21) Application number: **24769657.8**

(52) Cooperative Patent Classification (CPC):
**G02B 9/64; G02B 13/00; G02B 13/06; G02B 13/18**

(22) Date of filing: **19.01.2024**

(86) International application number:
**PCT/CN2024/073334**

(87) International publication number:
**WO 2024/187961 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 CN 202310246058**

(71) Applicant: **Jiangxi Lianchuang Electronic Co.,
Ltd.
Nanchang, Jiangxi 330096 (CN)**

(72) Inventors:
• **NIU, Yupeng
Nanchang, Jiangxi 330096 (CN)**
• **CHEN, Weijian
Nanchang, Jiangxi 330096 (CN)**
• **WANG, Kemin
Nanchang, Jiangxi 330096 (CN)**

(74) Representative: **SONN Patentanwälte GmbH & Co
KG
Riemergasse 14
1010 Wien (AT)**

(54) **OPTICAL LENS**

(57) Provided is an optical lens assembly. The optical lens assembly includes a total of seven lenses, where the seven lenses arranged in sequence from an object side to an imaging surface along an optical axis are as follows: a first lens with a negative focal power, where an image-side surface of the first lens is concave; a second lens with a focal power, where an object-side surface of the second-lens is convex, and an image-side surface of the second lens is concave; a third lens with a focal power; a fourth lens with a positive focal power, where an object-side surface and an image-side surface of the fourth lens are both convex; a fifth lens with a focal power; a sixth lens with focal power; and a seventh lens with a positive focal power. An effective focal length f of the optical lens assembly and a focal length $f_2$ of the second lens satisfy: $14.0 < |f2/f|$.

**FIG. 1**

EP 4 682 607 A1

**Description**

**CROSS-REFERENCE TO RELATED APPLICATIONS**

This application claims priority to Chinese application No. 2023102460583, filed on March 15, 2023, the content of which is incorporated herein by reference in its entirety for all purposes.

**TECHNICAL FIELD**

The present application relates to the technical field of optical lens assembly, and in particular to an optical lens assembly.

**BACKGROUND**

With the development of intelligent automobiles, the driving assistance functions of vehicles are gradually enhanced, in which visual information collection is the core tool. As the level of autonomous driving increases, the requirements for on-board cameras, especially front cameras, are also gradually increasing. Front cameras can enhance active safety and driver assistance functions, such as automatic emergency braking (AEB), adaptive cruise control (ACC), lane keeping assist system (LKAS) and traffic jam assist (TJA). While front cameras have the advantages of high resolution, large field of view, and good environmental adaptability, they also have disadvantages such as large number of lenses and an excessively long total optical length, which are not conducive to the miniaturization of electronic systems.

**SUMMARY**

In view of the above problems, the objective of the present application is to provide an optical lens assembly that can solve one or more of the above problems.
In order to achieve the above objective, the technical solution of the present application is as follows.
An optical lens assembly, comprising seven lenses, wherein the seven lenses arranged in sequence from an object side to an imaging surface along an optical axis are as follows:

a first lens with a negative focal power, having an image-side surface being a concave surface;

a second lens with a focal power, having an object-side surface being a convex surface and an image-side surface being a concave surface;

a third lens with a focal power;

a fourth lens with a positive focal power, having an object-side surface being a convex surface and an image-side surface being a convex surface;

a fifth lens with a focal power;

a sixth lens with a focal power; and

a seventh lens with a positive focal power;

wherein, an effective focal length f of the optical lens assembly and a focal length $f_2$ of the second lens satisfy: $14.0 < | f_2/f|$.

Furthermore, a total optical length TTL and the effective focal length f of the optical lens assembly satisfy: $5.5 < TTL/f < 9.5$.
Furthermore, the effective focal length f of the optical lens assembly and a real image height IH corresponding to a maximum field of view satisfy: $1.5 < IH/f < 2.0$.
Furthermore, a maximum field of view FOV and an f-number FNO of the optical lens assembly satisfy: $80° < FOV/FNO < 110°$.
Furthermore, the effective focal length f of the optical lens assembly, a maximum field of view FOV, and a real image height IH corresponding to the maximum field of view satisfy: $85° < f \times FOV/IH < 120°$.
Furthermore, the effective focal length f of the optical lens assembly and a focal length $f_1$ of the first lens satisfy:

-3.5 < $f_1/f$ < -2.0.

Furthermore, the effective focal length f of the optical lens assembly and a focal length $f_3$ of the third lens satisfy: 3.0 < $|f_3/f|$ < 18.0.

Furthermore, the effective focal length f of the optical lens assembly and a focal length $f_4$ of the fourth lens satisfy: 0 < $f_4/f$ < 2.5.

Furthermore, the effective focal length f of the optical lens assembly and a focal length $f_5$ of the fifth lens satisfy: 1.0 < $|f_5/f|$ < 4.0.

Furthermore, the effective focal length f of the optical lens assembly and a focal length $f_6$ of the sixth lens satisfy: $|f_6/f|$<22.0.

Furthermore, the effective focal length f of the optical lens assembly and a focal length $f_7$ of the seventh lens satisfy: 1.8 < $f_7/f$ < 8.0.

Furthermore, a radius of curvature $R_3$ of the object-side surface and a radius of curvature $R_4$ of the image-side surface of the second lens satisfy: 1.0 < $R_3/R_4$ < 1.8.

Furthermore, a total optical length TTL of the optical lens assembly and a sum $\Sigma CT$ of center thicknesses of the first to seventh lenses along the optical axis satisfy: 0.6 < $\Sigma CT/TTL$ < 0.7.

Compared with the related art, the beneficial effects of the present application are as follows: by reasonably matching the lens shapes and focal power combinations among various lenses, the effects of a wide field of view, a large aperture, and miniaturization have been achieved.

The additional aspects and advantages of the present application will be partially presented in the following description, while others will become evident from the description below, or can be understood through the practice of the present application.

## BRIEF DESCRIPTION OF DRAWINGS

The above and/or additional aspects and advantages of the present application will become apparent and easily understood from the description of the embodiments in conjunction with the accompanying drawings, in which:

FIG. 1 is a structural schematic diagram of an optical lens assembly according to Embodiment 1 of the present application.

FIG. 2 is a structural schematic diagram of an optical lens assembly according to Embodiment 2 of the present application.

FIG. 3 is a structural schematic diagram of an optical lens assembly according to Embodiment 3 of the present application.

FIG. 4 is a structural schematic diagram of an optical lens assembly according to Embodiment 4 of the present application.

FIG. 5 is a structural schematic diagram of an optical lens assembly according to Embodiment 5 of the present application.

FIG. 6 is a structural schematic diagram of an optical lens assembly according to Embodiment 6 of the present application.

FIG. 7 is a structural schematic diagram of an optical lens assembly according to Embodiment 7 of the present application.

FIG. 8 is a structural schematic diagram of an optical lens assembly according to Embodiment 8 of the present application.

FIG. 9 is a structural schematic diagram of an optical lens assembly according to Embodiment 9 of the present application.

FIG. 10 is a structural schematic diagram of an optical lens assembly according to Embodiment 10 of the present application.

FIG. 11 is a structural schematic diagram of an optical lens assembly according to Embodiment 11 of the present application.

FIG. 12 is a structural schematic diagram of an optical lens assembly according to Embodiment 12 of the present application.

FIG. 13 is a structural schematic diagram of an optical lens assembly according to Embodiment 13 of the present application.

## DETAILED DESCRIPTION

To better understand the present application, various aspects of the present application will be described in more detail with reference to the accompanying drawings. It should be understood that these detailed descriptions are merely descriptions of the embodiments of the present application, and do not limit the scope of the present application in any way. Throughout the specification, the same reference numerals refer to the same elements. The expression "and/or" includes any and all combinations of one or more of the associated listed items.

It should be noted that, in the present specification, the expressions such as first, second, third, etc. are merely used to distinguish one feature from another, but do not represent any limitation to the features. Therefore, the first lens discussed below may also be referred to as the second lens or the third lens without departing from the teaching of the present application.

In the drawings, the thickness, size, and shape of the lenses have been slightly exaggerated for ease of explanation. Specifically, the shapes of spherical or aspherical surfaces shown in the drawings are illustrated by way of example. That is, the shapes of spherical or aspherical surfaces are not limited to those shown in the drawings. The drawings serve merely as examples and are not drawn to scale strictly.

In this disclosure, the paraxial region refers to the region near the optical axis. When the lens surface is convex and the position of the convex surface is not defined, it indicates that the lens surface is convex at least in the paraxial region. When the lens surface is concave and the position of the concave surface is not defined, it indicates that the lens surface is concave at least in the paraxial region. The surface of each lens closest to the subject is called the object-side surface of the lens, and the surface of each lens closest to the imaging surface is called the image-side surface of the lens.

It should also be understood that the terms "comprise", "comprising", "having", "include" and/or "including", when used in this specification, indicate the presence of stated features, elements and/or components, but do not exclude the presence or addition of one or more other features, elements, components and/or combinations thereof. Furthermore, when an expression such as "at least one of..." appear before a list of enumerated features, it applies to the entire list of enumerated features, rather than individual elements within the list. Additionally, when describing embodiments of the present application, the use of "may" or "can" indicates "one or more embodiments of the present application". Furthermore, the word "exemplary" is intended to refer to examples or illustrations.

Unless otherwise defined, all terms (including technical terms and scientific terms) used herein have the same meaning as commonly understood by one of ordinary skill in the art to which the present application belongs. It should also be understood that terms (such as those defined in commonly used dictionaries) should be interpreted as having meanings consistent with their meanings in the context of the related art, and will not be interpreted in an idealized or overly formal sense unless otherwise explicitly defined as such herein.

It should be noted that, in the absence of conflict, the embodiments and the features in the embodiments of the present application may be combined with each other. The present application will be described in detail below with reference to the accompanying drawings and in combination with embodiments.

The optical lens assembly according to the embodiments of the present application includes, in sequence from the object side to the image side, a first lens, a second lens, a third lens, a fourth lens, a fifth lens, a sixth lens, a seventh lens, an optical filter and a protective glass.

In some embodiments, the first lens may have a negative focal power, which is beneficial for reducing the inclination angle of the incident light beams, thereby effectively contributing to adjust the field of view on the object side. The image-side surface of the first lens is concave, which is beneficial for collecting as much light beams from the peripheral field of view into the subsequent optical lenses as possible, thereby achieving wide-angle light collection. Furthermore, the refractive index

of the first lens is greater than 1.70. Adopting the first lens with a higher refractive index is beneficial for reducing the effective working diameter of the first lens, avoiding excessive light divergence which could lead to an excessively large diameter of the lenses at the rear end of the optical lens assembly.

In some embodiments, the object-side surface of the second lens is convex while the image-side surface is concave, which is beneficial for transitioning and adjusting the light beams that have been excessively refracted (deflected) by the first lens, and is beneficial for reducing the effective diameter of the overall light beams and thus reducing the diameter at the front end of the optical lens assembly.

In some embodiments, the fourth lens has a positive focal power, which is beneficial for converging light beams while reducing the deflection angle of the light beams, and allows a smooth transition of light path. The object-side surface and image-side surface of the fourth lens are both convex, which can not only converge the light beams from the peripheral field of view so that the converged light beams smoothly enter the subsequent optical system, but also reduce the coma aberration generated by the fourth lens itself, thereby improving the imaging quality of the optical lens assembly.

In some embodiments, the seventh lens may have a positive focal power, which is beneficial for suppressing the angle at which light from the peripheral field of view is incident on the imaging surface, effectively transmitting more light beams to the imaging surface and improving the imaging quality of the optical lens assembly. The object-side surface of the seventh lens is a convex surface, which is beneficial for improving the relative illumination of the peripheral field of view and avoiding or alleviating the occurrence of vignetting, thereby improving the imaging quality of the optical lens assembly.

In some embodiments, the fifth lens and the sixth lens may be cemented to form a cemented lens, which may effectively correct the chromatic aberrations of the optical lens assembly, reduce the sensitivity of the optical lens assembly to eccentricity, balance the aberration of the optical lens assembly, and improve the imaging quality of the optical lens assembly. This configuration may also reduce the assembly sensitivity of the optical lens assembly, thereby reducing the processing difficulty of the optical lens assembly and improving the assembly yield of the optical lens assembly.

In some embodiments, a diaphragm for limiting the light beam may be arranged between the third lens and the fourth lens or between the fourth lens and the fifth lens. The diaphragm may be arranged near the object-side surface of the fourth lens or the fifth lens, which can not only reduce the generation of ghost images in the optical lens assembly, but also narrow the range of light beams emitted from the front end of the optical lens assembly and reduce the diameter at the rear end of the optical lens assembly.

In some embodiments, the f-number FNO of the optical lens assembly satisfies: $1.60 \leq FNO$. Satisfying the aforementioned range is beneficial for achieving the characteristics of large aperture and can also ensure image clarity even in low-light environments or at night.

In some embodiments, the maximum field of view FOV of the optical lens assembly satisfies: $150° < FOV < 200°$. Satisfying the aforementioned range is beneficial for achieving the characteristics of wide-angle, thereby enabling the acquisition of more scene information and fulfilling the requirements for large-area detection.

In some embodiments, the incident angle CRA of the chief light beam of the maximum field of view of the optical lens assembly on the image plane satisfies: $12° < CRA < 20°$. Satisfying the aforementioned range can allow for a larger allowable error range between the CRA of the optical lens assembly and the CRA of the chip's photosensitive element, enhancing the adaptability of the optical lens assembly to the image sensor.

In some embodiments, the total optical length TTL and the effective focal length f of the optical lens assembly satisfy: $5.5 < TTL/f < 9.5$. Satisfying the aforementioned range can effectively limit the length of the optical lens assembly and achieve miniaturization of the optical lens assembly.

In some embodiments, the effective focal length f of the optical lens assembly and the real image height IH corresponding to the maximum field of view satisfy: $1.5 < IH/f < 2.0$. Satisfying the aforementioned range can not only achieve the characteristics of wide-angle, thereby fulfilling the requirements for large-range shooting, but also achieve the characteristics of large image plane, thereby improving the imaging quality of the optical lens assembly.

In some embodiments, the maximum field of view FOV and the f-number FNO of the optical lens assembly satisfy: $80° < FOV/FNO < 110°$. Satisfying the aforementioned range is beneficial for expanding the field of view of the optical lens assembly and increasing the aperture of the optical lens assembly, thereby achieving the characteristics of wide angle and large aperture. Achieving the characteristics of wide angle is beneficial for the optical lens assembly to acquire more scene information, fulfilling the requirements of large-range detection. Achieving the characteristics of large aperture is beneficial for mitigating the problem of rapid decrease in relative brightness of the peripheral field of view caused by wide angle, therefore is also beneficial for acquiring more scene information.

In some embodiments, the effective focal length f of the optical lens assembly, the maximum field of view FOV, and the real image height IH corresponding to the maximum field of view satisfy: $85° < f \times FOV/IH < 120°$. Satisfying the aforementioned range can balance the requirements for large-range detection and high-quality imaging, enhancing the adaptability of optical lens assembly.

In some embodiments, the effective focal length f of the optical lens assembly and the focal length $f_1$ of the first lens satisfy: $-3.5 < f_1/f < -2.0$. By satisfying the aforementioned range, the first lens may be configured to have an appropriate negative focal power, which is beneficial for providing a gentler change in the refraction angle of the incident light, avoiding excessive aberrations caused by a sharper change in the refraction angle; and at the same time facilitating more light beams to enter the subsequent optical system, increasing the illumination and improving the imaging quality of the optical lens assembly.

In some embodiments, the effective focal length f of the optical lens assembly and the focal length $f_2$ of the second lens satisfy: $14.0 < |f_2/f|$. By satisfying the aforementioned range, the second lens may be configured to have an appropriate focal power. By reasonably limiting the focal power of the second lens (for example, a relatively low focal power), the influence of the second lens on the back focal shift under high and low temperature conditions can be reduced, thereby improving the imaging quality of the optical lens assembly.

In some embodiments, the effective focal length f of the optical lens assembly and the focal length $f_3$ of the third lens satisfy: 3.0 <|$f_3$/f| < 18.0. By satisfying the aforementioned range, the third lens may be configured to have an appropriate focal power, which is beneficial for balancing the coma aberration of the optical lens assembly, improving the imaging quality of the optical lens assembly.

In some embodiments, the effective focal length f of the optical lens assembly and the focal length $f_4$ of the fourth lens satisfy: 0<$f_4$/f<2.5. By satisfying the aforementioned range, the fourth lens may be configured to have an appropriate positive focal power, which is beneficial for a smooth transition of light path, thereby improving the imaging quality of the optical lens assembly.

In some embodiments, the effective focal length f of the optical lens assembly and the focal length $f_5$ of the fifth lens satisfy: 1.0<|fs/f|<4.0. By satisfying the aforementioned range, the fifth lens may be configured to have an appropriate focal power, which is beneficial for balancing various aberrations of the optical lens assembly, thereby improving the imaging quality of the optical lens assembly.

In some embodiments, the effective focal length f of the optical lens assembly and the focal length $f_6$ of the sixth lens satisfy: |$f_6$/f|<22.0. By satisfying the aforementioned range, the sixth lens may be configured to have an appropriate focal power, which is beneficial for balancing various aberrations of the optical lens assembly, thereby improving the imaging quality of the optical lens assembly.

In some embodiments, the effective focal length f of the optical lens assembly and the focal length $f_7$ of the seventh lens satisfy: 1.8<$f_7$/f<8.0. By satisfying the aforementioned range, the seventh lens may be configured to have an appropriate positive focal power, which is beneficial for improving the ability to converge light of the peripheral field of view, thereby improving the relative illumination of the optical lens assembly.

In some embodiments, the radius of curvature $R_3$ of the object-side surface and the radius of curvature $R_4$ of the image-side surface of the second lens satisfy: 1.0<$R_3$/$R_4$<1.8. By satisfying the aforementioned range, the second lens is allowed to adopt a lens shape similar to a concentric circle, which can reduce the optical path difference between the center and the periphery of the lens, and is beneficial for correcting the distortion of the optical lens assembly.

In some embodiments, the total optical length TTL of the optical lens assembly and the sum ΣCT of the center thicknesses of the first to seventh lenses along the optical axis respectively satisfy: 0.6<ΣCT/TTL<0.7. Satisfying the aforementioned range can effectively shorten the total length of the optical lens assembly, and at the same time is beneficial for the structural design and production process of the optical lens assembly.

In order to make the system have better optical performances, multiple aspherical lenses are adopted in the optical lens assembly, and the shapes of the multiple aspherical surfaces of the optical lens assembly satisfy:

$$ z = \frac{ch^2}{1 + \sqrt{1 - (1 + K)c^2 h^2}} + Ah^2 + Bh^4 + Ch^6 + Dh^8 + Eh^{10} + Fh^{12} + Gh^{14} + Hh^{16} $$

where z represents the distance between the surface and the vertex of the surface in the direction of the optical axis, h represents the distance from the optical axis to the surface, c represents the curvature of the surface vertex, K represents the quadratic surface coefficient, and A, B, C, D, E, F, G, and H represent the second-order, fourth-order, sixth-order, eighth-order, tenth-order, twelfth-order, fourteenth-order, and sixteenth-order surface coefficients, respectively.

The present application is further described below with reference to a number of embodiments. In various embodiments, the thickness, radius of curvature, and material of each lens in the optical lens assembly may be different. For specific differences, please refer to the parameter tables of various embodiments. The following embodiments are only preferred implementation modes of the present application, but the implementation modes of the present application are not limited to the following embodiments. Any other changes, substitutions, combinations or simplifications that do not deviate from the inventive concept of the present application should be regarded as equivalent replacements and are included in the scope of protection of the present application.

**Embodiment 1**

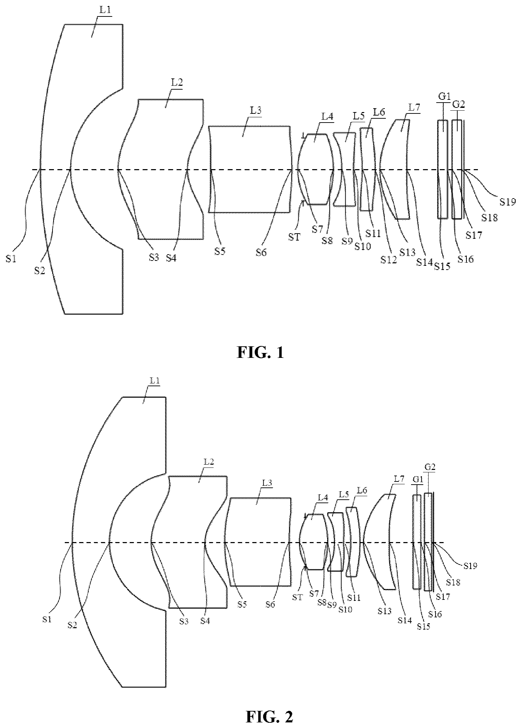

Please refer to FIG. 1, which is a structural schematic diagram of an optical lens assembly provided in Embodiment 1 of the present application. The optical lens assembly includes, in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface thereof S4 is concave.

The third lens L3 has a positive focal power, an object-side surface S5 thereof is concave, and an image-side surface S6 thereof is convex.

The diaphragm ST.

The fourth lens L4 has a positive focal power, and an object-side surface S7 and an image-side surface S8 thereof are both convex.

The fifth lens L5 has a negative focal power, and an object-side surface S9 and an image-side surface S10 thereof are both concave.

The sixth lens L6 has a negative focal power, an object-side surface S11 thereof is concave, and an image-side surface S12 thereof is convex.

The seventh lens L7 has a positive focal power, and an object-side surface S13 and an image-side surface S14 thereof are both convex.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 1 are shown in Table 1-1.

Table 1-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 18.59 | 1.27 | 1.75 | 52.34 |
| S2 | | spherical surface | 3.69 | 2.00 | | |
| S3 | second lens | aspheric surface | 2.80 | 2.90 | 1.54 | 55.98 |
| S4 | | aspheric surface | 1.80 | 0.98 | | |
| S5 | third lens | aspheric surface | -7.02E+10 | 3.42 | 1.64 | 22.97 |
| S6 | | aspheric surface | -11.83 | 0.47 | | |
| ST | diaphragm | plane | infinite | -0.22 | | |
| S7 | fourth lens | spherical surface | 2.77 | 1.49 | 1.59 | 68.34 |
| S8 | | spherical surface | -3.83 | 0.36 | | |
| S9 | fifth lens | aspheric surface | -5.43 | 0.50 | 1.64 | 22.97 |
| S10 | | aspheric surface | 8.89 | 0.36 | | |
| S11 | sixth lens | aspheric surface | -5.82 | 0.54 | 1.54 | 55.98 |
| S12 | | aspheric surface | -7.84 | 0.20 | | |
| S13 | seventh lens | aspheric surface | 3.24 | 1.13 | 1.54 | 55.98 |
| S14 | | aspheric surface | -667.72 | 1.30 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lens of the optical lens assembly in Embodiment 1 are shown in Table 1-2.

Table 1-2

| Surface number | K | A | B | C | D |
|---|---|---|---|---|---|
| S3 | -3.40E+00 | 0.00E+00 | 9.76E-03 | -2.38E-03 | 1.63E-04 |
| S4 | -8.94E-01 | 0.00E+00 | -2.39E-02 | -3.17E-03 | 7.49E-04 |
| S5 | -1.00E+02 | 0.00E+00 | -8.14E-03 | 4.23E-03 | -6.24E-03 |
| S6 | -3.22E+00 | 0.00E+00 | -1.47E-03 | 7.93E-04 | -5.43E-04 |
| S9 | -6.90E+01 | 0.00E+00 | -1.04E-01 | 4.85E-02 | -2.50E-02 |
| S10 | 1.90E+01 | 0.00E+00 | -3.30E-02 | 1.48E-02 | -3.61E-03 |
| S11 | 1.10E+01 | 0.00E+00 | 3.58E-02 | -7.88E-04 | 1.72E-03 |
| S12 | 5.87E+00 | 0.00E+00 | 1.29E-02 | -1.04E-02 | 4.25E-03 |
| S13 | -1.14E+00 | 0.00E+00 | 5.78E-03 | -3.96E-03 | 1.22E-03 |
| S14 | 1.06E+05 | 0.00E+00 | 8.54E-03 | 4.48E-03 | -2.38E-03 |
| Surface number | K | E | F | G | H |
| S3 | -3.40E+00 | -1.22E-05 | 7.29E-07 | -2.02E-09 | -5.93E-10 |
| S4 | -8.94E-01 | 8.22E-05 | -1.27E-04 | 3.10E-05 | -1.73E-06 |
| S5 | -1.00E+02 | 4.66E-03 | -2.06E-03 | 4.74E-04 | -4.28E-05 |
| S6 | -3.22E+00 | 2.04E-04 | 6.04E-05 | 5.24E-06 | -6.80E-06 |
| S9 | -6.90E+01 | 6.65E-03 | 2.22E-04 | -8.64E-05 | -7.15E-05 |
| S10 | 1.90E+01 | -6.08E-04 | 5.51E-04 | -7.00E-05 | -6.69E-06 |
| S11 | 1.10E+01 | 3.47E-04 | -3.88E-04 | 2.60E-05 | 9.12E-06 |
| S12 | 5.87E+00 | 3.21E-04 | -1.75E-04 | -1.25E-05 | -1.30E-06 |
| S13 | -1.14E+00 | -2.40E-04 | 3.40E-05 | -2.24E-06 | 3.36E-09 |
| S14 | 1.06E+05 | 3.28E-04 | -1.58E-06 | -2.99E-06 | 2.81E-07 |

**Embodiment 2**

Please refer to FIG. 2, which is a structural schematic diagram of the optical lens assembly provided in Embodiment 2 of the present application. The optical lens assembly includes, in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a negative focal power, an object-side surface S3 thereof is convex, and an image-side surface S4 thereof is concave.

The third lens L3 has a positive focal power, an object-side surface S5 thereof is convex, and an image-side surface S6 thereof is concave.

The diaphragm ST.

The fourth lens L4 has a positive focal power, and an object-side surface S7 and an image-side surface S8 thereof are both convex.

The fifth lens L5 has a negative focal power, and an object-side surface S9 and image-side surface S10 thereof are both concave.

The sixth lens L6 has a negative focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 2 are shown in Table 2-1.

Table 2-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 12.72 | 2.00 | 1.75 | 52.34 |
| S2 | | spherical surface | 3.78 | 2.25 | | |
| S3 | second lens | aspheric surface | 2.77 | 2.91 | 1.54 | 55.98 |
| S4 | | aspheric surface | 1.70 | 1.06 | | |
| S5 | third lens | aspheric surface | 9.13 | 3.50 | 1.64 | 22.97 |
| S6 | | aspheric surface | 20.45 | 0.85 | | |
| ST | diaphragm | plane | infinite | -0.31 | | |
| S7 | fourth lens | spherical surface | 2.54 | 1.52 | 1.59 | 68.35 |
| S8 | | spherical surface | -4.44 | 0.36 | | |
| S9 | fifth lens | aspheric surface | -6.08 | 0.50 | 1.64 | 22.97 |
| S10 | | aspheric surface | 12.74 | 0.38 | | |
| S11 | Sixth lens | aspheric surface | -5.71 | 0.50 | 1.54 | 55.98 |
| S12 | | aspheric surface | -7.84 | 0.20 | | |
| S13 | seventh lens | aspheric surface | 2.93 | 1.37 | 1.54 | 55.98 |
| S14 | | aspheric surface | 27.99 | 1.30 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lens in the optical lens assembly of Embodiment 2 are shown in Table 2-2.

Table 2-2

| Surface number | K | A | B | C | D |
|---|---|---|---|---|---|
| S3 | -3.39E+00 | 0.00E+00 | 1.09E-02 | -2.30E-03 | 1.71E-04 |
| S4 | -6.96E-01 | 0.00E+00 | -1.88E-02 | -4.14E-03 | 9.79E-04 |
| S5 | 8.76E+00 | 0.00E+00 | 2.29E-03 | -8.45E-04 | 5.91E-04 |
| S6 | -1.00E+02 | 0.00E+00 | 5.60E-03 | -4.49E-03 | 6.18E-03 |
| S9 | -8.40E+01 | 0.00E+00 | -1.06E-01 | 4.67E-02 | -2.55E-02 |
| S10 | -8.67E+00 | 0.00E+00 | -4.91E-02 | 1.45E-02 | -3.42E-03 |
| S11 | 1.07E+01 | 0.00E+00 | 2.07E-02 | -3.98E-03 | 9.81E-04 |
| S12 | 7.11E+00 | 0.00E+00 | 1.42E-02 | -1.21E-02 | 3.82E-03 |
| S13 | -1.40E+00 | 0.00E+00 | 4.17E-03 | -3.53E-03 | 1.24E-03 |
| S14 | -1.62E+03 | 0.00E+00 | 9.87E-03 | 4.53E-03 | -2.28E-03 |

(continued)

| Surface number | K | E | F | G | H |
|---|---|---|---|---|---|
| S3 | -3.39E+00 | -1.26E-05 | 6.62E-07 | -5.20E-09 | -4.88E-10 |
| S4 | -6.96E-01 | 1.31E-04 | -1.36E-04 | 2.62E-05 | -1.66E-06 |
| S5 | 8.76E+00 | -1.58E-04 | -1.42E-05 | 8.18E-06 | -7.12E-07 |
| S6 | -1.00E+02 | -4.78E-03 | 2.03E-03 | -4.37E-04 | 3.99E-05 |
| S9 | -8.40E+01 | 6.91E-03 | 3.48E-04 | -1.22E-04 | -5.46E-05 |
| S10 | -8.67E+00 | -5.35E-04 | 5.73E-04 | -5.36E-05 | 1.08E-05 |
| S11 | 1.07E+01 | 4.43E-04 | -3.15E-04 | 4.93E-05 | 9.73E-06 |
| S12 | 7.11E+00 | 2.28E-04 | -1.66E-04 | 4.82E-07 | -6.97E-09 |
| S13 | -1.40E+00 | -2.44E-04 | 3.22E-05 | -2.33E-06 | 5.78E-08 |
| S14 | -1.62E+03 | 3.23E-04 | -2.77E-07 | -2.95E-06 | 1.39E-07 |

**Embodiment 3**

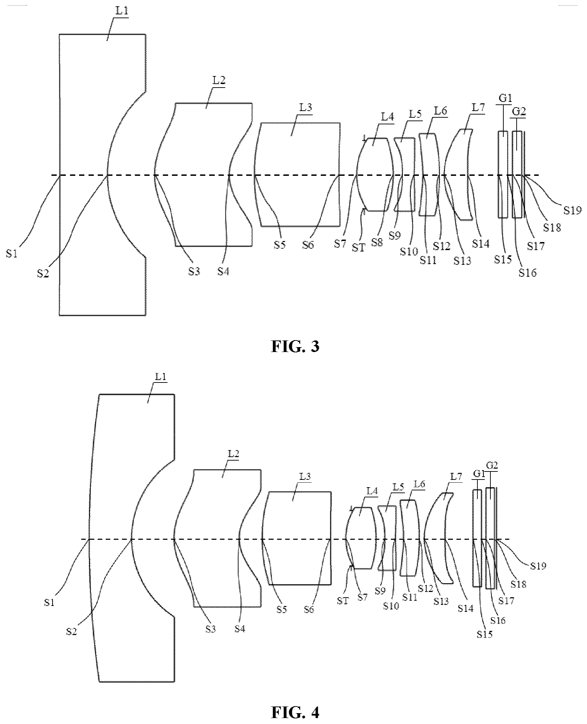

Please refer to FIG. 3, which is a structural schematic diagram of the optical lens assembly provided in Embodiment 3 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1 and a protective glass G2.

The first lens L1 has a negative focal power, and an object-side surface S1 and an image-side surface S2 thereof are both concave.

The second lens L2 has a positive focal power, an object-side surface S3 thereof is convex, and an image-side surface S4 thereof is concave.

The third lens L3 has a positive focal power, and an object-side surface S5 and an image-side surface S6 thereof are both convex.

The diaphragm ST.

The fourth lens L4 has a positive focal power, and an object-side surface S7 and an image-side surface S8 thereof are both convex.

The fifth lens L5 has a negative focal power, and an object-side surface S9 and an image-side surface S10 thereof are both concave.

The sixth lens L6 has a negative focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 3 are shown in Table 3-1.

Table 3-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | -525.86 | 2.00 | 1.75 | 52.34 |
| S2 | | spherical surface | 4.53 | 2.00 | | |
| S3 | second lens | aspheric surface | 2.87 | 3.16 | 1.54 | 55.98 |
| S4 | | aspheric surface | 1.80 | 1.07 | | |

(continued)

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S5 | third lens | aspheric surface | 9.52 | 3.58 | 1.64 | 22.97 |
| S6 | | aspheric surface | -325.38 | 1.06 | | |
| ST | diaphragm | plane | infinite | -0.32 | | |
| S7 | fourth lens | spherical surface | 2.67 | 1.54 | 1.59 | 68.35 |
| S8 | | spherical surface | -4.37 | 0.39 | | |
| S9 | fifth lens | aspheric surface | -5.50 | 0.50 | 1.64 | 22.97 |
| S10 | | aspheric surface | 10.13 | 0.36 | | |
| S11 | sixth lens | aspheric surface | -5.80 | 0.70 | 1.54 | 55.98 |
| S12 | | aspheric surface | -7.88 | 0.20 | | |
| S13 | seventh lens | aspheric surface | 2.69 | 0.99 | 1.54 | 55.98 |
| S14 | | aspheric surface | 92.44 | 1.30 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 3 are shown in Table 3-2.

Table 3-2

| Surface number | K | A | B | C | D |
|---|---|---|---|---|---|
| S3 | -3.36E+00 | 0.00E+00 | 9.00E-03 | -2.23E-03 | 1.72E-04 |
| S4 | -6.73E-01 | 0.00E+00 | -1.70E-02 | -3.77E-03 | 9.32E-04 |
| S5 | 1.13E+01 | 0.00E+00 | 3.52E-03 | -7.08E-04 | 5.56E-04 |
| S6 | 1.00E+02 | 0.00E+00 | 6.23E-03 | -4.64E-03 | 6.54E-03 |
| S9 | -8.20E+01 | 0.00E+00 | -1.03E-01 | 4.90E-02 | -2.55E-02 |
| S10 | 2.39E+01 | 0.00E+00 | -4.27E-02 | 1.48E-02 | -3.25E-03 |
| S11 | 1.16E+01 | 0.00E+00 | 2.63E-02 | -9.68E-04 | 1.52E-03 |
| S12 | 9.92E+00 | 0.00E+00 | 1.11E-02 | -1.17E-02 | 3.84E-03 |
| S13 | -1.13E+00 | 0.00E+00 | 5.19E-03 | -3.77E-03 | 1.24E-03 |
| S14 | 8.29E+02 | 0.00E+00 | 1.34E-02 | 4.73E-03 | -2.21E-03 |
| Surface number | K | E | F | G | H |
| S3 | -3.36E+00 | -1.27E-05 | 6.65E-07 | -4.55E-09 | -4.22E-10 |
| S4 | -6.73E-01 | 1.16E-04 | -1.36E-04 | 2.64E-05 | -1.68E-06 |
| S5 | 1.13E+01 | -1.57E-04 | -1.53E-05 | 7.98E-06 | -7.53E-07 |
| S6 | 1.00E+02 | -4.69E-03 | 1.98E-03 | -4.68E-04 | 4.92E-05 |
| S9 | -8.20E+01 | 6.60E-03 | 2.27E-04 | -1.34E-04 | -4.28E-05 |

(continued)

| Surface number | K | E | F | G | H |
|---|---|---|---|---|---|
| S10 | 2.39E+01 | -5.10E-04 | 5.54E-04 | -7.90E-05 | -1.13E-05 |
| S11 | 1.16E+01 | 4.71E-04 | -3.83E-04 | 1.51E-05 | 8.10E-06 |
| S12 | 9.92E+00 | 2.49E-04 | -1.57E-04 | -1.16E-06 | -3.56E-06 |
| S13 | -1.13E+00 | -2.24E-04 | 3.72E-05 | -1.86E-06 | -1.12E-07 |
| S14 | 8.29E+02 | 3.28E-04 | 1.95E-07 | -1.99E-06 | 8.14E-07 |

**Embodiment 4**

Please refer to FIG. 4, which is a structural schematic diagram of the optical lens assembly provided in Embodiment 4 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, and an object-side surface S5 and an image-side surface S6 thereof are both convex.

The diaphragm ST.

The fourth lens L4 has a positive focal power, and an object-side surface S7 and an image-side surface S8 thereof are both convex.

The fifth lens L5 has a negative focal power, and an object-side surface S9 and an image-side surface S10 thereof are both concave.

The sixth lens L6 has a negative focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly of Embodiment 4 are shown in Table 4-1.

Table 4-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 48.18 | 2.00 | 1.75 | 52.34 |
| S2 | | spherical surface | 4.39 | 2.00 | | |
| S3 | second lens | aspheric surface | 2.86 | 3.07 | 1.54 | 55.98 |
| S4 | | aspheric surface | 1.80 | 1.08 | | |
| S5 | third lens | aspheric surface | 9.29 | 3.22 | 1.64 | 22.97 |
| S6 | | aspheric surface | -191.05 | 0.97 | | |
| ST | diaphragm | plane | infinite | -0.25 | | |
| S7 | fourth lens | spherical surface | 2.65 | 1.43 | 1.59 | 68.35 |
| S8 | | spherical surface | -4.42 | 0.41 | | |

(continued)

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S9 | fifth lens | aspheric surface | -5.54 | 0.50 | 1.64 | 22.97 |
| S10 | | aspheric surface | 10.00 | 0.38 | | |
| S11 | sixth lens | aspheric surface | -5.74 | 0.75 | 1.54 | 55.98 |
| S12 | | aspheric surface | -8.03 | 0.23 | | |
| S13 | seventh lens | aspheric surface | 2.88 | 0.98 | 1.54 | 55.98 |
| S14 | | aspheric surface | 67.23 | 1.32 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 4 are shown in Table 4-2.

Table 4-2

| Surface number | K | A | B | C | D |
|---|---|---|---|---|---|
| S3 | -3.23E+00 | 0.00E+00 | 9.17E-03 | -2.21E-03 | 1.73E-04 |
| S4 | -6.64E-01 | 0.00E+00 | -1.65E-02 | -3.72E-03 | 9.37E-04 |
| S5 | 1.15E+01 | 0.00E+00 | 3.70E-03 | -7.07E-04 | 5.54E-04 |
| S6 | -8.76E+01 | 0.00E+00 | 6.50E-03 | -4.66E-03 | 6.52E-03 |
| S9 | -8.40E+01 | 0.00E+00 | -1.03E-01 | 4.91E-02 | -2.54E-02 |
| S10 | 2.48E+01 | 0.00E+00 | -4.25E-02 | 1.48E-02 | -3.26E-03 |
| S11 | 1.18E+01 | 0.00E+00 | 2.59E-02 | -9.20E-04 | 1.57E-03 |
| S12 | 1.00E+01 | 0.00E+00 | 1.09E-02 | -1.18E-02 | 3.84E-03 |
| S13 | -1.05E+00 | 0.00E+00 | 5.65E-03 | -3.85E-03 | 1.21E-03 |
| S14 | 9.73E+02 | 0.00E+00 | 1.37E-02 | 4.83E-03 | -2.17E-03 |
| Surface number | K | E | F | G | H |
| S3 | -3.23E+00 | -1.25E-05 | 6.72E-07 | -4.82E-09 | -5.84E-10 |
| S4 | -6.64E-01 | 1.17E-04 | -1.36E-04 | 2.64E-05 | -1.67E-06 |
| S5 | 1.15E+01 | -1.57E-04 | -1.50E-05 | 8.07E-06 | -7.34E-07 |
| S6 | -8.76E+01 | -4.70E-03 | 1.98E-03 | -4.67E-04 | 5.03E-05 |
| S9 | -8.40E+01 | 6.64E-03 | 2.41E-04 | -1.30E-04 | -4.15E-05 |
| S10 | 2.48E+01 | -5.00E-04 | 5.60E-04 | -7.48E-05 | -9.25E-06 |
| S11 | 1.18E+01 | 4.94E-04 | -3.75E-04 | 1.80E-05 | 1.16E-05 |
| S12 | 1.00E+01 | 2.53E-04 | -1.55E-04 | 1.51E-07 | -2.88E-06 |

(continued)

| Surface number | K | E | F | G | H |
|---|---|---|---|---|---|
| S13 | -1.05E+00 | -2.28E-04 | 3.71E-05 | -1.74E-06 | -7.13E-08 |
| S14 | 9.73E+02 | 3.35E-04 | 2.79E-07 | -2.63E-06 | 5.41E-07 |

**Embodiment 5**

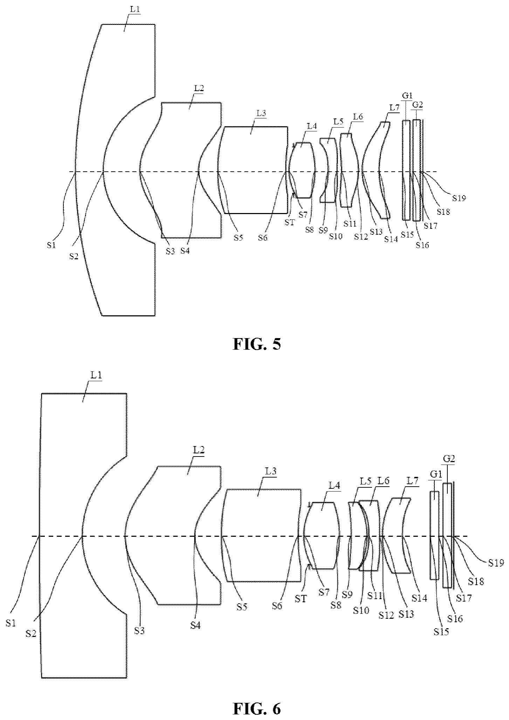

Please refer to FIG.5, which is a structural schematic diagram of the optical lens assembly provided in Embodiment 5 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1 and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, an object-side surface S5 thereof is convex, and an image-side surface S6 thereof is concave.

The diaphragm ST.

The fourth lens L4 has a positive focal power, and an object-side surface S7 and an image-side surface S8 thereof are both convex.

The fifth lens L5 has a negative focal power, and an object-side surface S9 and an image-side surface S10 thereof are both concave.

The sixth lens L6 has a positive focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 5 are shown in Table 5-1.

Table 5-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 22.83 | 1.52 | 1.75 | 52.34 |
| S2 | | spherical surface | 4.28 | 2.00 | | |
| S3 | second lens | aspheric surface | 2.72 | 3.21 | 1.54 | 55.98 |
| S4 | | aspheric surface | 1.77 | 1.05 | | |
| S5 | third lens | aspheric surface | 9.90 | 3.75 | 1.64 | 22.97 |
| S6 | | aspheric surface | 15.96 | 0.42 | | |
| ST | diaphragm | plane | infinite | -0.24 | | |
| S7 | fourth lens | spherical surface | 2.78 | 1.42 | 1.59 | 68.34 |
| S8 | | spherical surface | -4.59 | 0.72 | | |
| S9 | fifth lens | aspheric surface | -5.88 | 0.49 | 1.64 | 22.97 |
| S10 | | aspheric surface | 11.25 | 0.24 | | |
| S11 | sixth lens | aspheric surface | -8.80 | 0.93 | 1.54 | 55.98 |
| S12 | | aspheric surface | -3.10 | 0.20 | | |

(continued)

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S13 | seventh lens | aspheric surface | 3.02 | 0.93 | 1.54 | 55.98 |
| S14 | | aspheric surface | 4.66 | 1.29 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 5 are shown in Table 5-2.

Table 5-2

| Surface number | K | A | B | C | D |
|---|---|---|---|---|---|
| S3 | -3.19E+00 | 0.00E+00 | 1.15E-02 | -2.15E-03 | 1.70E-04 |
| S4 | -6.58E-01 | 0.00E+00 | -1.54E-02 | -3.88E-03 | 9.34E-04 |
| S5 | 1.15E+01 | 0.00E+00 | 3.09E-03 | -5.66E-04 | 5.40E-04 |
| S6 | 1.22E+01 | 0.00E+00 | 8.35E-03 | -4.30E-03 | 6.52E-03 |
| S9 | -9.06E+01 | 0.00E+00 | -1.07E-01 | 4.72E-02 | -2.64E-02 |
| S10 | -5.67E+01 | 0.00E+00 | -5.11E-02 | 1.32E-02 | -3.01E-03 |
| S11 | 1.89E+01 | 0.00E+00 | 8.68E-03 | -1.65E-03 | 1.76E-03 |
| S12 | 8.77E-01 | 0.00E+00 | 2.56E-02 | -1.11E-02 | 3.79E-03 |
| S13 | -8.54E-01 | 0.00E+00 | 7.22E-03 | -4.16E-03 | 1.17E-03 |
| S14 | -2.12E+01 | 0.00E+00 | 1.00E-02 | 4.54E-03 | -2.23E-03 |
| Surface number | K | E | F | G | H |
| S3 | -3.19E+00 | -1.29E-05 | 6.36E-07 | -5.80E-09 | -3.37E-10 |
| S4 | -6.58E-01 | 1. 18E-04 | -1.36E-04 | 2.65E-05 | -1.63E-06 |
| S5 | 1.15E+01 | -1.56E-04 | -1.39E-05 | 8.34E-06 | -6.96E-07 |
| S6 | 1.22E+01 | -4.69E-03 | 1.99E-03 | -4.61E-04 | 5.02E-05 |
| S9 | -9.06E+01 | 6.35E-03 | 2.40E-04 | -9.64E-05 | -4.40E-05 |
| S10 | -5.67E+01 | -3.98E-04 | 5.58E-04 | -7.91E-05 | -2.68E-06 |
| S11 | 1.89E+01 | 6.36E-04 | -3.09E-04 | 2.95E-05 | 7.16E-07 |
| S12 | 8.77E-01 | 2.70E-04 | -1.39E-04 | 7.27E-06 | 8.13E-08 |
| S13 | -8.54E-01 | -2.46E-04 | 3.28E-05 | -2.16E-06 | 2.67E-08 |
| S14 | -2.12E+01 | 3.18E-04 | -3.17E-06 | -3.30E-06 | 2.12E-07 |

**Embodiment 6**

Please refer to FIG. 6, which is a structural schematic diagram of the optical lens assembly provided in Embodiment 6 of the present application. The optical lens assembly includes, in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, an object-side surface S5 thereof is convex, and an image-side surface S6 thereof is concave.

The diaphragm ST.

The fourth lens L4 has a positive focal power, and an object-side surface S7 and an image-side surface S8 thereof are both convex.

The fifth lens L5 has a positive focal power, an object-side surface S9 thereof is concave, and an image-side surface S10 thereof is convex.

The sixth lens L6 has a negative focal power, and an object-side surface S11 and an image-side surface S12 thereof are both concave.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 6 are shown in Table 6-1.

Table 6-1

| Surface number | Surface name | Surface type | Radius of curvature R (mm) | Thickness D / distance L (mm) | Refractiv e index Nd | Abbe number Vd |
|---|---|---|---|---|---|---|
| | object surface | plane | infinite | infinite | | |
| S1 | first lens | spherical surface | 216.51 | 2.00 | 1.75 | 52.34 |
| S2 | | spherical surface | 4.35 | 2.00 | | |
| S3 | second lens | aspheric surface | 2.64 | 3.25 | 1.54 | 55.98 |
| S4 | | aspheric surface | 1.71 | 1.24 | | |
| S5 | third lens | aspheric surface | 10.03 | 3.61 | 1.64 | 22.97 |
| S6 | | aspheric surface | *15.41* | 0.51 | | |
| ST | diaphragm | plane | infinite | -0.25 | | |
| S7 | fourth lens | spherical surface | 2.85 | 1.66 | 1.59 | 68.34 |
| S8 | | spherical surface | -4.57 | 0.55 | | |
| S9 | fifth lens | aspheric surface | -11.07 | 0.74 | 1.64 | 22.97 |
| S10 | | aspheric surface | -3.25 | 0.09 | | |
| S11 | sixth lens | aspheric surface | -5.12 | 0.50 | 1.54 | 55.98 |
| S12 | | aspheric surface | 20.40 | 0.14 | | |
| S13 | seventh lens | aspheric surface | 3.88 | 0.93 | 1.54 | 55.98 |
| S14 | | aspheric surface | 5.86 | 1.30 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging | plane | infinite | | | |

(continued)

| Surface number | Surface name | Surface type | Radius of curvature R (mm) | Thickness D / distance L (mm) | Refractiv e index Nd | Abbe number Vd |
|---|---|---|---|---|---|---|
| | object surface | plane | infinite | infinite | | |
| | surface | | | | | |

The surface parameters of the aspherical lenses in the optical lens assembly of Embodiment 6 are shown in Table 6-2.

Table 6-2

| Surface number | K | A | B | C | D |
|---|---|---|---|---|---|
| S3 | -3.10E+00 | 0.00E+00 | 1.34E-02 | -1.99E-03 | 1.73E-04 |
| S4 | -6.50E-01 | 0.00E+00 | -1.21E-02 | -4.90E-03 | 9.50E-04 |
| S5 | 3.73E+00 | 0.00E+00 | 3.99E-04 | -7.26E-04 | 6.59E-04 |
| S6 | 4.01E+01 | 0.00E+00 | 9.92E-03 | -4.10E-03 | 6.85E-03 |
| S9 | 2.81E+01 | 0.00E+00 | 1.14E-02 | -3.97E-03 | 4.51E-04 |
| S10 | 1.36E+00 | 0.00E+00 | 2.28E-02 | -1.22E-02 | 2.85E-03 |
| S11 | -6.58E+01 | 0.00E+00 | -1.04E-01 | 4.81E-02 | -2.62E-02 |
| S12 | 6.15E+01 | 0.00E+00 | -5.26E-02 | 1.43E-02 | -2.36E-03 |
| S13 | -1.83E-01 | 0.00E+00 | 9.15E-03 | -3.80E-03 | 1.22E-03 |
| S14 | 1.62E+00 | 0.00E+00 | 1.89E-02 | 2.18E-03 | -2.20E-03 |
| Surface number | K | E | F | G | H |
| S3 | -3.10E+00 | -1.33E-05 | 5.99E-07 | -7.98E-09 | -3.06E-10 |
| S4 | -6.50E-01 | 1.65E-04 | -1.27E-04 | 2.65E-05 | -2.22E-06 |
| S5 | 3.73E+00 | -1.22E-04 | -9.37E-06 | 8.12E-06 | -1.12E-06 |
| S6 | 4.01E+01 | -4.56E-03 | 2.01E-03 | -4.86E-04 | 3.55E-05 |
| S9 | 2.81E+01 | 5.84E-04 | -2.25E-04 | 8.73E-06 | -5.02E-05 |
| S10 | 1.36E+00 | -1.25E-04 | -2.34E-04 | -1.29E-05 | -4.40E-06 |
| S11 | -6.58E+01 | 6.27E-03 | 1.75E-04 | -1.19E-04 | -4.36E-05 |
| S12 | 6.15E+01 | -2.42E-04 | 5.71E-04 | -8.91E-05 | -9.36E-06 |
| S13 | -1.83E-01 | -2.04E-04 | 4.46E-05 | -2.51E-06 | -1.73E-06 |
| S14 | 1.62E+00 | 3.97E-04 | 9.18E-06 | -3.86E-06 | -1.51E-06 |

**Embodiment 7**

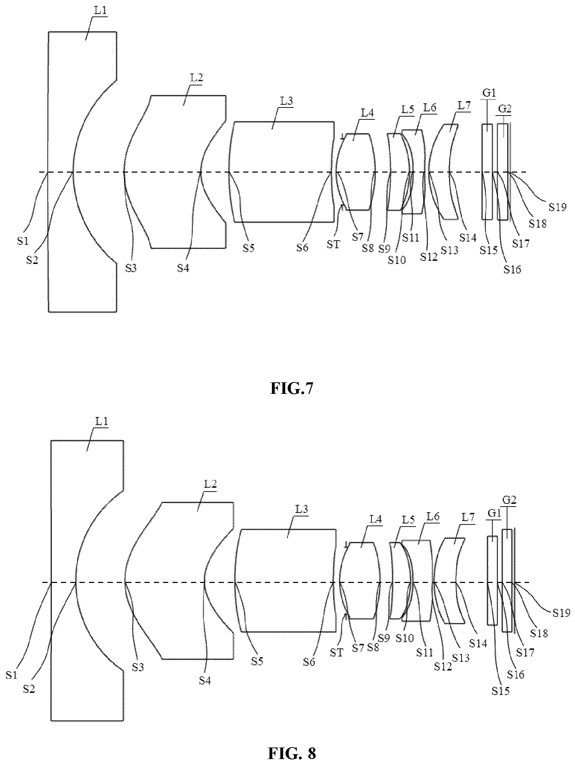

Please refer to FIG. 7, which is a structural schematic diagram of the optical lens assembly provided in Embodiment 7 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, an object-side surface S5 thereof is convex, and an image-side surface S6 thereof is concave.

The diaphragm ST.

The fourth lens L4 has a positive focal power, and an object-side surface S7 and an image-side surface S8 thereof are both convex.

The fifth lens L5 has a positive focal power, an object-side surface S9 thereof is concave, and an image-side surface S10 thereof is convex.

The sixth lens L6 has a negative focal power, and an object-side surface S11 and an image-side surface S12 thereof are both concave.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 7 are shown in Table 7-1.

Table 7-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 409.13 | 1.00 | 1.75 | 52.34 |
| S2 | | spherical surface | 4.63 | 1.99 | | |
| S3 | second lens | aspheric surface | 2.80 | 3.01 | 1.54 | 55.98 |
| S4 | | aspheric surface | 1.74 | 1.11 | | |
| S5 | third lens | aspheric surface | 10.15 | 4.02 | 1.64 | 22.97 |
| S6 | | aspheric surface | 15.26 | 0.42 | | |
| ST | diaphragm | plane | infinite | -0.24 | | |
| S7 | fourth lens | spherical surface | 2.82 | 1.53 | 1.59 | 68.34 |
| S8 | | spherical surface | -4.58 | 0.60 | | |
| S9 | fifth lens | aspheric surface | -8.19 | 0.75 | 1.64 | 22.97 |
| S10 | | aspheric surface | -2.99 | 0.13 | | |
| S11 | sixth lens | aspheric surface | -5.36 | 0.45 | 1.54 | 55.98 |
| S12 | | aspheric surface | 13.51 | 0.16 | | |
| S13 | seventh lens | aspheric surface | 3.12 | 0.80 | 1.54 | 55.98 |
| S14 | | aspheric surface | 5.44 | 1.29 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 7 are shown in Table 7-2.

Table 7-2

| Surface number | K | A | B | C | D |
|---|---|---|---|---|---|
| S3 | -3.53E+00 | 0.00E+00 | 1.15E-02 | -2.16E-03 | 1.67E-04 |

(continued)

| Surface number | K | A | B | C | D |
|---|---|---|---|---|---|
| S4 | -6.52E-01 | 0.00E+00 | -1.43E-02 | -4.00E-03 | 9.10E-04 |
| S5 | 7.57E+00 | 0.00E+00 | 1.44E-03 | -6.10E-04 | 5.62E-04 |
| S6 | 3.83E+01 | 0.00E+00 | 9.12E-03 | -3.65E-03 | 6.95E-03 |
| S9 | 1.94E+01 | 0.00E+00 | 9.57E-03 | -1.90E-03 | 1.44E-03 |
| S10 | 1.01E+00 | 0.00E+00 | 2.49E-02 | -1.13E-02 | 3.75E-03 |
| S11 | -7.14E+01 | 0.00E+00 | -1.06E-01 | 4.76E-02 | -2.63E-02 |
| S12 | -6.39E+01 | 0.00E+00 | -5.19E-02 | 1.34E-02 | -2.97E-03 |
| S13 | -8.29E-01 | 0.00E+00 | 7.11E-03 | -3.82E-03 | 1.23E-03 |
| S14 | -1.01E+01 | 0.00E+00 | 1.01E-02 | 4.33E-03 | -2.28E-03 |
| Surface number | K | E | F | G | H |
| S3 | -3.53E+00 | -1.31E-05 | 6.33E-07 | -4.79E-09 | -1.80E-10 |
| S4 | -6.52E-01 | 1.17E-04 | -1.35E-04 | 2.68E-05 | -1.54E-06 |
| S5 | 7.57E+00 | -1.51E-04 | -1.30E-05 | 8.39E-06 | -7.39E-07 |
| S6 | 3.83E+01 | -4.57E-03 | 2.01E-03 | -4.91E-04 | 1.12E-05 |
| S9 | 1.94E+01 | 4.54E-04 | -3.88E-04 | 1.17E-06 | -7.71E-06 |
| S10 | 1.01E+00 | 2.55E-04 | -1.52E-04 | -5.70E-07 | -3.46E-06 |
| S11 | -7.14E+01 | 6.40E-03 | 2.66E-04 | -8.34E-05 | -3.78E-05 |
| S12 | -6.39E+01 | -3.87E-04 | 5.65E-04 | -7.65E-05 | -1.86E-06 |
| S13 | -8.29E-01 | -2.42E-04 | 3.26E-05 | -2.31E-06 | -1.29E-08 |
| S14 | -1.01E+01 | 3.09E-04 | -4.48E-06 | -3.51E-06 | 1.72E-07 |

## Embodiment 8

Please refer to FIG. 8, which is a structural schematic diagram of the optical lens assembly provided in Embodiment 8 of the present application. The optical lens assembly includes, in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, and an object-side surface S1 and an image-side surface S2 thereof are both concave.

The second lens L2 has a positive focal power, an object-side surface S3 thereof is convex, and an image-side surface S4 thereof is concave.

The third lens L3 has a positive focal power, an object-side surface S5 thereof is convex, and an image-side surface S6 thereof is concave.

The diaphragm ST.

The fourth lens L4 has a positive focal power, and an object-side surface S7 and an image-side surface S8 thereof are both convex.

The fifth lens L5 has a positive focal power, an object-side surface S9 thereof is concave, and an image-side surface S10 thereof is convex.

The sixth lens L6 has a negative focal power, and an object-side surface S11 and an image-side surface S12 thereof are both concave.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 8 are shown in Table 8-1.

Table 8-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | -1690.80 | 1.00 | 1.75 | 52.34 |
| S2 | | spherical surface | 4.43 | 2.00 | | |
| S3 | second lens | aspheric surface | 2.62 | 3.23 | 1.54 | 55.98 |
| S4 | | aspheric surface | 1.71 | 1.24 | | |
| S5 | third lens | aspheric surface | 9.79 | 4.00 | 1.64 | 22.97 |
| S6 | | aspheric surface | 15.56 | 0.51 | | |
| ST | diaphragm | plane | infinite | -0.26 | | |
| S7 | fourth lens | spherical surface | 2.86 | 1.65 | 1.59 | 68.34 |
| S8 | | spherical surface | -4.57 | 0.51 | | |
| S9 | fifth lens | aspheric surface | -10.98 | 0.73 | 1.54 | 55.98 |
| S10 | | aspheric surface | -3.24 | 0.09 | | |
| S11 | sixth lens | aspheric surface | -4.93 | 0.79 | 1.64 | 22.97 |
| S12 | | aspheric surface | 20.19 | 0.08 | | |
| S13 | seventh lens | aspheric surface | 4.10 | 0.89 | 1.54 | 55.98 |
| S14 | | aspheric surface | 6.58 | 1.28 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 8 are shown in Table 8-2.

Table 8-2

| Surface number | K | A | B | C | D |
|---|---|---|---|---|---|
| S3 | -3.03E+00 | 0.00E+00 | 1.31E-02 | -2.00E-03 | 1.73E-04 |
| S4 | -6.44E-01 | 0.00E+00 | -1.18E-02 | -4.81E-03 | 9.65E-04 |
| S5 | 4.80E+00 | 0.00E+00 | 6.76E-04 | -7.60E-04 | 6.53E-04 |
| S6 | 3.18E+01 | 0.00E+00 | 9.38E-03 | -4.17E-03 | 6.87E-03 |
| S9 | 2.72E+01 | 0.00E+00 | 1.20E-02 | -4.12E-03 | 3.30E-04 |
| S10 | 1.37E+00 | 0.00E+00 | 2.26E-02 | -1.21E-02 | 2.85E-03 |
| S11 | -6.79E+01 | 0.00E+00 | -1.04E-01 | 4.81E-02 | -2.62E-02 |
| S12 | 6.28E+01 | 0.00E+00 | -5.21E-02 | 1.41E-02 | -2.44E-03 |
| S13 | -7.13E-02 | 0.00E+00 | 9.24E-03 | -3.57E-03 | 1.27E-03 |
| S14 | 3.14E+00 | 0.00E+00 | 2.13E-02 | 1.85E-03 | -2.28E-03 |
| Surface number | K | E | F | G | H |
| S3 | -3.03E+00 | -1.32E-05 | 6.05E-07 | -7.38E-09 | -2.49E-10 |

(continued)

| Surface number | K | E | F | G | H |
|---|---|---|---|---|---|
| S4 | -6.44E-01 | 1.67E-04 | -1.26E-04 | 2.65E-05 | -2.25E-06 |
| S5 | 4.80E+00 | -1.23E-04 | -9.48E-06 | 8.13E-06 | -1.11E-06 |
| S6 | 3.18E+01 | -4.55E-03 | 2.01E-03 | -4.91E-04 | 3.06E-05 |
| S9 | 2.72E+01 | 5.59E-04 | -2.24E-04 | 1.08E-05 | -5.03E-05 |
| S10 | 1.37E+00 | -1.37E-04 | -2.40E-04 | -1.37E-05 | -3.73E-06 |
| S11 | -6.79E+01 | 6.30E-03 | 1.80E-04 | -1.21E-04 | -4.71E-05 |
| S12 | 6.28E+01 | -2.69E-04 | 5.65E-04 | -8.87E-05 | -8.31E-06 |
| S13 | -7.13E-02 | -1.95E-04 | 4.50E-05 | -3.03E-06 | -2.08E-06 |
| S14 | 3.14E+00 | 3.91E-04 | 9.94E-06 | -3.42E-06 | -1.45E-06 |

**Embodiment 9**

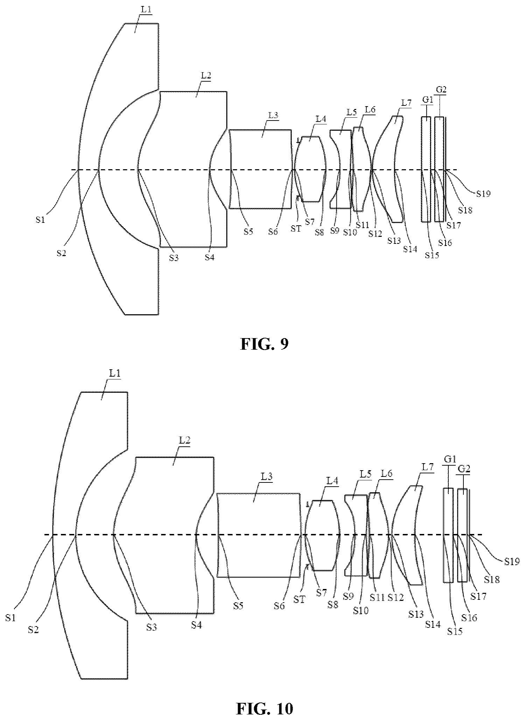

Please refer to FIG. 9, which is a structural schematic diagram of the optical lens assembly provided in Embodiment 9 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, an object-side surface S5 thereof is concave, and an image-side surface S6 thereof is convex.

The diaphragm ST.

The fourth lens L4 has a positive focal power, and an object-side surface S7 and an image-side surface S8 thereof are both convex.

The fifth lens L5 has a negative focal power, an object-side surface S9 thereof is concave, and an image-side surface S10 thereof is convex.

The sixth lens L6 has a positive focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 9 are shown in Table 9-1.

Table 9-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 11.61 | 0.93 | 1.75 | 52.34 |
| S2 | | spherical surface | 3.81 | 1.79 | | |
| S3 | second lens | aspheric surface | 2.96 | 3.28 | 1.54 | 55.98 |
| S4 | | aspheric surface | 1.82 | 0.96 | | |
| S5 | third lens | aspheric surface | -83.84 | 2.80 | 1.64 | 22.97 |
| S6 | | aspheric surface | -13.79 | 0.27 | | |

(continued)

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| ST | diaphragm | plane | infinite | -0.16 | | |
| S7 | fourth lens | spherical surface | 3.13 | 1.42 | 1.59 | 68.35 |
| S8 | | spherical surface | -3.72 | 0.65 | | |
| S9 | fifth lens | aspheric surface | -6.23 | 0.48 | 1.64 | 22.97 |
| S10 | | aspheric surface | 5.48 | 0.13 | | |
| S11 | sixth lens | aspheric surface | -9.19 | 0.82 | 1.54 | 55.98 |
| S12 | | aspheric surface | -3.08 | 0.05 | | |
| S13 | seventh lens | aspheric surface | 3.22 | 1.00 | 1.54 | 55.98 |
| S14 | | aspheric surface | 6.69 | 1.25 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 9 are shown in Table 9-2.

Table 9-2

| Surface number | K | A | B | C | D |
|---|---|---|---|---|---|
| S3 | -3.97E+00 | 0.00E+00 | 1.15E-02 | -2.22E-03 | 1.70E-04 |
| S4 | -6.53E-01 | 0.00E+00 | -1.95E-02 | -3.59E-03 | 1.14E-03 |
| S5 | 3.53E+01 | 0.00E+00 | -5.57E-03 | 4.74E-03 | -6.26E-03 |
| S6 | -2.51E+01 | 0.00E+00 | 2.57E-04 | 1.22E-03 | -3.13E-04 |
| S9 | -8.22E+01 | 0.00E+00 | -1.18E-01 | 4.82E-02 | -2.49E-02 |
| S10 | -1.68E+01 | 0.00E+00 | -4.72E-02 | 1.41E-02 | -2.80E-03 |
| S11 | 2.14E+01 | 0.00E+00 | 1.46E-02 | -1.53E-03 | 1.79E-03 |
| S12 | 8.52E-01 | 0.00E+00 | 2.26E-02 | -1.07E-02 | 3.90E-03 |
| S13 | -4.10E-01 | 0.00E+00 | 1.06E-02 | -4.43E-03 | 1.14E-03 |
| S14 | -7.50E+01 | 0.00E+00 | 1.36E-02 | 4.43E-03 | -2.27E-03 |
| Surface number | K | E | F | G | H |
| S3 | -3.97E+00 | -1.26E-05 | 6.49E-07 | -6.33E-09 | -3.70E-10 |
| S4 | -6.53E-01 | 1.13E-04 | -1.53E-04 | 2.36E-05 | -1.52E-07 |
| S5 | 3.53E+01 | 4.65E-03 | -2.04E-03 | 4.56E-04 | -4.06E-05 |
| S6 | -2.51E+01 | 1.14E-04 | 1.10E-04 | -3.05E-05 | -1.38E-06 |
| S9 | -8.22E+01 | 6.63E-03 | 2.40E-04 | -1.28E-04 | -5.08E-05 |
| S10 | -1.68E+01 | -3.55E-04 | 5.51E-04 | -8.59E-05 | -4.52E-06 |
| S11 | 2.14E+01 | 6.39E-04 | -3.05E-04 | 2.95E-05 | -3.65E-07 |

(continued)

| Surface number | K | E | F | G | H |
|---|---|---|---|---|---|
| S12 | 8.52E-01 | 2.90E-04 | -1.40E-04 | 6.24E-06 | 7.60E-08 |
| S13 | -4.10E-01 | -2.50E-04 | 3.27E-05 | -2.13E-06 | -4.97E-09 |
| S14 | -7.50E+01 | 3.09E-04 | -4.61E-06 | -3.46E-06 | 2.53E-07 |

**Embodiment 10**

Please refer to FIG. 10, which is a structural schematic diagram of the optical lens assembly provided in Embodiment 10 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, an object-side surface S5 thereof is concave, and an image-side surface S6 thereof is convex.

The diaphragm ST.

The fourth lens L4 has a positive focal power, and an object-side surface S7 and an image-side surface S8 thereof are both convex.

The fifth lens L5 has a negative focal power, and an object-side surface S9 and an image-side surface S10 thereof are both concave.

The sixth lens L6 has a positive focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 10 are shown in Table 10-1.

Table 10-1

| Surface number | Surface name | Surface type | Radius of curvature R (mm) | Thickness D / distance L (mm) | Refractive index Nd | Abbe number Vd |
|---|---|---|---|---|---|---|
|  | object surface | plane | infinite | infinite |  |  |
| S1 | first lens | spherical surface | 16.04 | 0.98 | 1.75 | 52.34 |
| S2 |  | spherical surface | 4.12 | 1.60 |  |  |
| S3 | second lens | aspheric surface | 3.03 | 3.50 | 1.54 | 55.98 |
| S4 |  | aspheric surface | 1.82 | 0.94 |  |  |
| S5 | third lens | aspheric surface | -164.69 | 3.50 | 1.64 | 22.97 |
| S6 |  | aspheric surface | -15.23 | 0.28 |  |  |
| ST | diaphragm | plane | infinite | -0.11 |  |  |
| S7 | fourth lens | spherical surface | 3.18 | 1.47 | 1.59 | 68.35 |
| S8 |  | spherical surface | -3.67 | 0.65 |  |  |
| S9 | fifth lens | aspheric surface | -6.22 | 0.49 | 1.64 | 22.97 |
| S10 |  | aspheric surface | 5.40 | 0.13 |  |  |

(continued)

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S11 | sixth lens | aspheric surface | -9.24 | 0.81 | 1.54 | 55.98 |
| S12 | | aspheric surface | -3.09 | 0.14 | | |
| S13 | seventh lens | aspheric surface | 3.20 | 0.98 | 1.54 | 55.98 |
| S14 | | aspheric surface | 7.09 | 1.22 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 10 are shown in Table 10-2.

Table 10-2

| Surface number | K | A | B | C | D |
|---|---|---|---|---|---|
| S3 | -4.25E+00 | 0.00E+00 | 1.11E-02 | -2.22E-03 | 1.71E-04 |
| S4 | -6.55E-01 | 0.00E+00 | -1.98E-02 | -3.50E-03 | 1.14E-03 |
| S5 | -9.98E+01 | 0.00E+00 | -4.76E-03 | 4.78E-03 | -6.26E-03 |
| S6 | -3.59E+01 | 0.00E+00 | 6.15E-04 | 1.33E-03 | -3.07E-04 |
| S9 | -8.17E+01 | 0.00E+00 | -1.18E-01 | 4.82E-02 | -2.49E-02 |
| S10 | -1.65E+01 | 0.00E+00 | -4.70E-02 | 1.41E-02 | -2.83E-03 |
| S11 | 2.15E+01 | 0.00E+00 | 1.46E-02 | -1.54E-03 | 1.79E-03 |
| S12 | 8.33E-01 | 0.00E+00 | 2.28E-02 | -1.06E-02 | 3.93E-03 |
| S13 | -2.93E-01 | 0.00E+00 | 1.15E-02 | -4.41E-03 | 1.13E-03 |
| S14 | -9.28E+01 | 0.00E+00 | 1.31E-02 | 4.32E-03 | -2.29E-03 |
| Surface number | K | E | F | G | H |
| S3 | -4.25E+00 | -1.26E-05 | 6.50E-07 | -6.45E-09 | -3.92E-10 |
| S4 | -6.55E-01 | 1.07E-04 | -1.55E-04 | 2.30E-05 | -3.43E-07 |
| S5 | -9.98E+01 | 4.65E-03 | -2.04E-03 | 4.55E-04 | -4.04E-05 |
| S6 | -3.59E+01 | 9.55E-05 | 9.84E-05 | -3.08E-05 | 4.22E-06 |
| S9 | -8.17E+01 | 6.62E-03 | 2.30E-04 | -1.33E-04 | -5.22E-05 |
| S10 | -1.65E+01 | -3.69E-04 | 5.46E-04 | -8.74E-05 | -4.92E-06 |
| S11 | 2.15E+01 | 6.39E-04 | -3.06E-04 | 2.88E-05 | -7.20E-07 |
| S12 | 8.33E-01 | 2.92E-04 | -1.41E-04 | 5.99E-06 | 1.68E-08 |
| S13 | -2.93E-01 | -2.51E-04 | 3.27E-05 | -2.12E-06 | -2.00E-09 |
| S14 | -9.28E+01 | 3.08E-04 | -4.55E-06 | -3.41E-06 | 2.67E-07 |

**Embodiment 11**

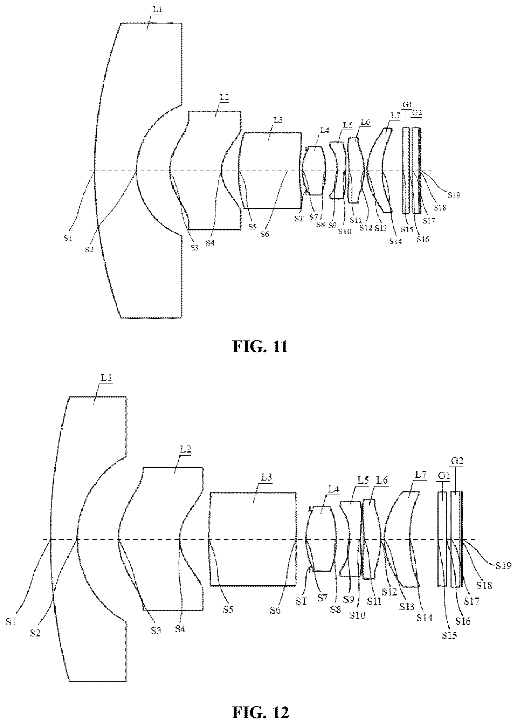

Please refer to FIG. 11, which is a structural schematic diagram of the optical lens assembly provided in Embodiment 11 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1, and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, an object-side surface S5 thereof is convex, and an image-side surface S6 thereof is concave.

The diaphragm ST.

The fourth lens L4 has a positive focal power, and an object-side surface S7 and an image-side surface S8 thereof are both convex.

The fifth lens L5 has a negative focal power, and an object-side surface S9 and an image-side surface S10 thereof are both concave.

The sixth lens L6 has a positive focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 11 are shown in Table 11-1.

Table 11-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 26.34 | 2.61 | 1.75 | 52.34 |
| S2 | | spherical surface | 4.34 | 2.07 | | |
| S3 | second lens | aspheric surface | 2.73 | 3.18 | 1.54 | 55.98 |
| S4 | | aspheric surface | 1.77 | 1.07 | | |
| S5 | third lens | aspheric surface | 9.82 | 3.80 | 1.64 | 22.97 |
| S6 | | aspheric surface | 15.99 | 0.42 | | |
| ST | diaphragm | plane | infinite | -0.24 | | |
| S7 | fourth lens | spherical surface | 2.78 | 1.44 | 1.59 | 68.35 |
| S8 | | spherical surface | -4.59 | 0.72 | | |
| S9 | fifth lens | aspheric surface | -5.94 | 0.50 | 1.64 | 22.97 |
| S10 | | aspheric surface | 11.59 | 0.22 | | |
| S11 | sixth lens | aspheric surface | -8.78 | 0.94 | 1.54 | 55.98 |
| S12 | | aspheric surface | -3.10 | 0.18 | | |
| S13 | seventh lens | aspheric surface | 3.06 | 0.93 | 1.54 | 55.98 |
| S14 | | aspheric surface | 4.66 | 1.29 | | |
| S15 | optical filter | plane | infinite | 0.40 | 1.52 | 64.20 |
| S16 | | plane | infinite | 0.20 | | |

(continued)

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment 11 are shown in Table 11-2.

Table 11-2

| Surface number | K | A | B | C | D |
|---|---|---|---|---|---|
| S3 | -3.23E+00 | 0.00E+00 | 1.14E-02 | -2.16E-03 | 1.69E-04 |
| S4 | -6.58E-01 | 0.00E+00 | -1.53E-02 | -3.88E-03 | 9.35E-04 |
| S5 | 1.15E+01 | 0.00E+00 | 3.01E-03 | -5.61E-04 | 5.40E-04 |
| S6 | 1.52E+01 | 0.00E+00 | 8.48E-03 | -4.34E-03 | 6.45E-03 |
| S9 | -9.17E+01 | 0.00E+00 | -1.07E-01 | 4.72E-02 | -2.64E-02 |
| S10 | -5.96E+01 | 0.00E+00 | -5.11E-02 | 1.32E-02 | -3.00E-03 |
| S11 | 1.89E+01 | 0.00E+00 | 8.72E-03 | -1.62E-03 | 1.77E-03 |
| S12 | 8.78E-01 | 0.00E+00 | 2.57E-02 | -1.11E-02 | 3.79E-03 |
| S13 | -8.43E-01 | 0.00E+00 | 7.20E-03 | -4.10E-03 | 1.17E-03 |
| S14 | -2.07E+01 | 0.00E+00 | 1.03E-02 | 4.51E-03 | -2.23E-03 |
| Surface number | K | E | F | G | H |
| S3 | -3.23E+00 | -1.29E-05 | 6.36E-07 | -5.75E-09 | -3.31E-10 |
| S4 | -6.58E-01 | 1. 18E-04 | -1.36E-04 | 2.65E-05 | -1.63E-06 |
| S5 | 1.15E+01 | -1.56E-04 | -1.39E-05 | 8.33E-06 | -6.97E-07 |
| S6 | 1.52E+01 | -4.72E-03 | 1.99E-03 | -4.58E-04 | 5.20E-05 |
| S9 | -9.17E+01 | 6.36E-03 | 2.42E-04 | -9.58E-05 | -4.39E-05 |
| S10 | -5.96E+01 | -3.99E-04 | 5.58E-04 | -7.91E-05 | -2.64E-06 |
| S11 | 1.89E+01 | 6.38E-04 | -3.09E-04 | 2.94E-05 | 6.69E-07 |
| S12 | 8.78E-01 | 2.70E-04 | -1.39E-04 | 7.23E-06 | 7.27E-08 |
| S13 | -8.43E-01 | -2.46E-04 | 3.28E-05 | -2.16E-06 | 2.69E-08 |
| S14 | -2.07E+01 | 3.18E-04 | -3.20E-06 | -3.30E-06 | 2.11E-07 |

**Embodiment 12**

Please refer to FIG. 12, which is a structural schematic diagram of the optical lens assembly provided in Embodiment 12 of the present application. The optical lens assembly includes: in sequence from the object side to the imaging surface along the optical axis, a first lens L1, a second lens L2, a third lens L3, a diaphragm ST, a fourth lens L4, a fifth lens L5, a sixth lens L6, a seventh lens L7, an optical filter G1 and a protective glass G2.

The first lens L1 has a negative focal power, an object-side surface S1 thereof is convex, and an image-side surface S2 thereof is concave.

The second lens L2 has a positive focal power, an object-side surface S3 thereof is convex, and an image-side surface S4 thereof is concave.

The third lens L3 has a positive focal power, and an object-side surface S5 and an image-side surface S6 thereof are both convex.

The diaphragm ST.

The fourth lens L4 has a positive focal power, and an object-side surface S7 and an image-side surface S8 thereof are both convex.

The fifth lens L5 has a negative focal power, and an object-side surface S9 and an image-side surface S10 thereof are both concave.

The sixth lens L6 has a positive focal power, an object-side surface S11 thereof is concave, and an image-side surface S12 thereof is convex.

The seventh lens L7 has a positive focal power, an object-side surface S13 thereof is convex, and an image-side surface S14 thereof is concave.

The optical filter G1 has an object-side surface S15 and image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 12 are shown in Table 12-1.

Table 12-1

| Surface number | Surface name | Surface type | Radius of curvature R (mm) | Thickness D /distance L (mm) | Refractive index Nd | Abbe number Vd |
|---|---|---|---|---|---|---|
| | object surface | plane | infinite | infinite | | |
| S1 | first lens | spherical surface | 25.15 | 1.23 | 1.75 | 52.34 |
| S2 | | spherical surface | 4.33 | 1.88 | | |
| S3 | second lens | aspheric surface | 2.64 | 2.79 | 1.54 | 55.98 |
| S4 | | aspheric surface | 1.67 | 1.34 | | |
| S5 | third lens | aspheric surface | 16.99 | 4.01 | 1.64 | 22.97 |
| S6 | | aspheric surface | -31.32 | 0.62 | | |
| ST | diaphragm | plane | infinite | -0.18 | | |
| S7 | fourth lens | spherical surface | 3.15 | 1.39 | 1.59 | 68.35 |
| S8 | | spherical surface | -4.18 | 0.59 | | |
| S9 | fifth lens | aspheric surface | -6.88 | 0.50 | 1.64 | 22.97 |
| S10 | | aspheric surface | 4.36 | 0.15 | | |
| S11 | sixth lens | aspheric surface | -8.60 | 0.79 | 1.54 | 55.98 |
| S12 | | aspheric surface | -3.10 | 0.16 | | |
| S13 | seventh lens | aspheric surface | 3.03 | 1.15 | 1.54 | 55.98 |
| S14 | | aspheric surface | 6.45 | 1.30 | | |
| S15 | optical filter | plane | infinite | 0.40 | 1.52 | 64.20 |
| S16 | | plane | infinite | 0.20 | | |
| S17 | protective glass | plane | infinite | 0.40 | 1.52 | 64.20 |
| S18 | | plane | infinite | 0.10 | | |
| S19 | imaging surface | plane | infinite | | | |

The surface parameters of the aspherical lenses in the optical lens assembly of Embodiment12 are shown in Table 12-2.

Table 12-2

| Surface number | K | A | B | C | D |
|---|---|---|---|---|---|
| S3 | -3.06E+00 | 0.00E+00 | 1.13E-02 | -2.26E-03 | 1.79E-04 |
| S4 | -6.61E-01 | 0.00E+00 | -1.90E-02 | -3.97E-03 | 8.56E-04 |
| S5 | -1.62E+01 | 0.00E+00 | 1.08E-03 | -9.02E-04 | 5.59E-04 |
| S6 | 8.77E+01 | 0.00E+00 | 3.71E-03 | -4.77E-03 | 6.50E-03 |
| S9 | -2.97E+01 | 0.00E+00 | -1.12E-01 | 4.99E-02 | -2.47E-02 |
| S10 | -3.88E+01 | 0.00E+00 | -4.63E-02 | 1.36E-02 | -2.88E-03 |
| S11 | 2.03E+01 | 0.00E+00 | 1.40E-02 | -1.13E-03 | 1.96E-03 |
| S12 | 8.09E-01 | 0.00E+00 | 3.08E-02 | -9.40E-03 | 3.73E-03 |
| S13 | -5.69E-01 | 0.00E+00 | 8.88E-03 | -4.53E-03 | 1.26E-03 |
| S14 | -5.34E+01 | 0.00E+00 | 1.51E-02 | 4.12E-03 | -2.18E-03 |
| Surface number | K | E | F | G | H |
| S3 | -3.06E+00 | -1.28E-05 | 5.76E-07 | -8.07E-09 | -2.83E-11 |
| S4 | -6.61E-01 | 1.10E-04 | -1.35E-04 | 2.66E-05 | -1.69E-06 |
| S5 | -1.62E+01 | -1.56E-04 | -1.49E-05 | 8.13E-06 | -6.91E-07 |
| S6 | 8.77E+01 | -4.66E-03 | 2.00E-03 | -4.68E-04 | 4.97E-05 |
| S9 | -2.97E+01 | 6.60E-03 | 2.04E-04 | -1.77E-04 | -4.51E-05 |
| S10 | -3.88E+01 | -2.88E-04 | 5.61E-04 | -8.69E-05 | -9.13E-06 |
| S11 | 2.03E+01 | 6.44E-04 | -3.14E-04 | 2.73E-05 | -5.03E-07 |
| S12 | 8.09E-01 | 2.47E-04 | -1.39E-04 | 5.64E-06 | -1.32E-07 |
| S13 | -5.69E-01 | -2.45E-04 | 3.18E-05 | -2.26E-06 | 4.45E-08 |
| S14 | -5.34E+01 | 3.27E-04 | -5.12E-06 | -3.65E-06 | 2.69E-07 |

**Embodiment 13**

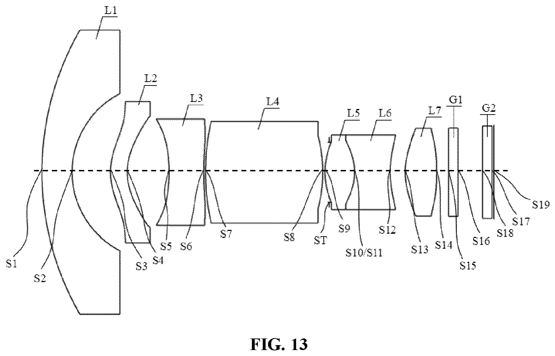

Please refer to FIG. 13, which is a structural schematic diagram of the optical lens assembly provided in Embodiment 13 of the present application. The optical lens assembly includes: in sequence from the object side to the imaging surface along the optical axis, a first lens L1, a second lens L2, a third lens L3, a fourth lens L4, a diaphragm ST, a fifth lens L5, a sixth lens L6, a seventh lens L7, an optical filter G1 and a protective glass G2.

The first lens L1 has a negative focal power, an object-side surface S1 thereof is convex, and an image-side surface S2 thereof is concave.

The second lens L2 has a negative focal power, an object-side surface S3 thereof is convex, and an image-side surface S4 thereof is concave.

The third lens L3 has a negative focal power, and an object-side surface S5 and an image-side surface S6 thereof are both concave.

The fourth lens L4 has a positive focal power, and an object-side surface S7 and an image-side surface S8 thereof are both convex.

The diaphragm ST.

The fifth lens L5 has a positive focal power, and an object-side surface S9 and an image-side surface S10 thereof are both convex.

The sixth lens L6 has a negative focal power, and an object-side surface S11 and an image-side surface S12 thereof are both concave.

The seventh lens L7 has a positive focal power, and an object-side surface S13 and an image-side surface S14 thereof are both convex.

The optical filter G1 has an object-side surface S15 and an image-side surface S16, which are both planes.

The protective glass G2 has an object-side surface S17 and an image-side surface S18, which are both planes.

The imaging surface S19 is a plane.

The specific parameters of each lens in the optical lens assembly in Embodiment 13 are shown in Table 13-1.

Table 13-1

| Surface number | Surface name | Surface type | Radius of curvature R (mm) | Thickness D / distance L (mm) | Refractive index Nd | Abbe number Vd |
|---|---|---|---|---|---|---|
| | object surface | plane | infinite | infinite | | |
| S1 | first lens | spherical surface | 15.19 | 1.59 | 1.83 | 42.74 |
| S2 | | spherical surface | 4.69 | 2.03 | | |
| S3 | second lens | aspheric surface | 3.44 | 0.88 | 1.64 | 22.97 |
| S4 | | aspheric surface | 3.07 | 2.21 | | |
| S5 | third lens | aspheric surface | -8.05 | 1.83 | 1.54 | 55.98 |
| S6 | | aspheric surface | 14.39 | 0.09 | | |
| S7 | fourth lens | spherical surface | 12.35 | 6.17 | 1.85 | 23.79 |
| S8 | | spherical surface | -7.70 | 0.35 | | |
| ST | diaphragm | plane | infinite | -0.23 | | |
| S9 | fifth lens | aspheric surface | 3.93 | 1.56 | 1.54 | 55.98 |
| S10/S11 | sixth lens | aspheric surface | -3.05 | 1.88 | 1.64 | 22.97 |
| S12 | | aspheric surface | 4.77 | 0.79 | | |
| S13 | seventh lens | aspheric surface | 3.33 | 1.66 | 1.54 | 55.98 |
| S14 | | aspheric surface | -17.18 | 0.63 | | |
| S15 | optical filter | plane | infinite | 0.50 | 1.52 | 64.21 |
| S16 | | plane | infinite | 1.29 | | |
| S17 | protective glass | plane | infinite | 0.50 | 1.52 | 64.21 |
| S18 | | plane | infinite | 0.10 | | |
| S19 | imaging surface | plane | infinite | | | |

The surface parameters of the aspherical lenses in the optical lens assembly of Embodiment 13 are shown in Table 13-2.

Table 13-2

| Surface number | K | A | B | C | D |
|---|---|---|---|---|---|
| S3 | -3.71E-01 | 0.00E+00 | -7.07E-03 | -4.54E-04 | 1.33E-06 |
| S4 | -5.58E-01 | 0.00E+00 | -5.31E-03 | -7.24E-04 | 2.01E-04 |
| S5 | -8.38E-03 | 0.00E+00 | -6.46E-04 | -5.78E-04 | 9.24E-06 |
| S6 | -2.22E+01 | 0.00E+00 | -3.08E-03 | -8.70E-04 | 2.31E-04 |
| S9 | -3.67E-01 | 0.00E+00 | -2.27E-03 | 8.97E-04 | -5.62E-04 |
| S10/S11 | 1.20E+00 | 0.00E+00 | -9.59E-03 | 1.84E-02 | -5.76E-03 |
| S12 | -2.57E+01 | 0.00E+00 | 7.76E-03 | -2.25E-03 | 2.35E-04 |
| S13 | -6.90E+00 | 0.00E+00 | -1.66E-03 | 1.29E-03 | -5.37E-04 |
| S14 | -1.14E+01 | 0.00E+00 | -1.37E-02 | 2.27E-03 | -1.36E-04 |
| Surface number | K | E | F | G | H |
| S3 | -3.71E-01 | 3.18E-06 | -1.37E-07 | | |

(continued)

| Surface number | K | E | F | G | H |
|---|---|---|---|---|---|
| S4 | -5.58E-01 | -2.65E-05 | 1.48E-06 | | |
| S5 | -8.38E-03 | 6.43E-06 | -2.80E-07 | | |
| S6 | -2.22E+01 | -2.14E-05 | 7.92E-07 | | |
| S9 | -3.67E-01 | 1.10E-04 | -5.30E-06 | | |
| S10/S11 | 1.20E+00 | 7.12E-04 | 6.63E-05 | | |
| S12 | -2.57E+01 | 3.55E-05 | -9.62E-06 | | |
| S13 | -6.90E+00 | 9.89E-05 | -5.44E-06 | | |
| S14 | -1.14E+01 | -1.98E-05 | 4.97E-06 | | |

Please refer to Table 14, which shows the optical characteristics corresponding to each of the aforementioned embodiments, including the effective focal length f, the total optical length TTL, the f-number FNO, the real image height IH, the field of view FOV of the optical lens assembly, and the value corresponding to each conditional expression in the embodiments.

Table 14

| Parameters and conditional expressions | Embodiment 1 | Embodiment 2 | Embodiment 3 | Embodiment 4 | Embodiment 5 |
|---|---|---|---|---|---|
| f(mm) | 2.41 | 2.91 | 2.29 | 2.61 | 2.90 |
| TTL(mm) | 17.79 | 19.49 | 19.63 | 19.19 | 19.02 |
| FNO | 1.80 | 1.80 | 1.60 | 1.80 | 1.80 |
| IH(mm) | 4.14 | 5.13 | 3.59 | 4.73 | 5.54 |
| EPD(mm) | 1.34 | 1.62 | 1.43 | 1.45 | 1.61 |
| FOV(°) | 154 | 160 | 160 | 160 | 190 |
| CRA(°) | 16.52 | 17.17 | 13.71 | 19.42 | 13.99 |
| TTL/f | 7.38 | 6.70 | 8.59 | 7.34 | 6.56 |
| IH/f | 1.72 | 1.76 | 1.57 | 1.81 | 1.91 |
| FOV/FNO | 85.56 | 88.89 | 100.00 | 88.89 | 105.56 |
| f×FOV/IH(°) | 89.69 | 90.79 | 101.81 | 88.41 | 99.56 |
| $f_1/f$ | -2.61 | -2.70 | -2.59 | -2.48 | -2.48 |
| $f_2/f$ | 207.28 | -49.34 | 134.57 | 191.25 | 18.03 |
| $f_3/f$ | 7.60 | 7.85 | 6.30 | 5.29 | 11.21 |
| $f_4/f$ | 1.22 | 1.02 | 1.33 | 1.15 | 1.08 |
| $f_5/f$ | -2.14 | -2.17 | -2.39 | -2.09 | -2.04 |
| $f_6/f$ | -19.16 | -14.65 | -20.14 | -16.13 | 2.89 |
| $f_7/f$ | 2.48 | 2.05 | 2.24 | 2.12 | 4.59 |
| $R_3/R_4$ | 1.56 | 1.64 | 1.60 | 1.59 | 1.54 |
| ∑CT/TTL | 0.63 | 0.63 | 0.64 | 0.64 | 0.64 |
| Parameters and conditional expressions | Embodiment 6 | Embodiment 7 | Embodiment 8 | Embodiment 9 | Embodiment 10 |
| f(mm) | 2.51 | 2.37 | 2.49 | 2.72 | 2.51 |

(continued)

| Parameters and conditional expressions | Embodiment 6 | Embodiment 7 | Embodiment 8 | Embodiment 9 | Embodiment 10 |
|---|---|---|---|---|---|
| TTL(mm) | 19.34 | 18.14 | 18.84 | 16.78 | 17.67 |
| FNO | 1.80 | 1.80 | 1.80 | 1.80 | 1.80 |
| IH(mm) | 4.48 | 3.80 | 4.17 | 4.79 | 3.91 |
| EPD(mm) | 1.40 | 1.32 | 1.38 | 1.51 | 1.39 |
| FOV(°) | 180 | 180 | 180 | 180 | 160 |
| CRA(°) | 26.47 | 19.34 | 23.88 | 14.27 | 13.11 |
| TTL/f | 7.69 | 7.65 | 7.57 | 6.17 | 7.05 |
| IH/f | 1.78 | 1.60 | 1.67 | 1.76 | 1.56 |
| FOV/FNO | 100.00 | 100.00 | 100.00 | 100.00 | 88.89 |
| $f{\times}FOV/IH$(°) | 101.04 | 112.39 | 107.50 | 102.17 | 102.57 |
| $f_1/f$ | -2.34 | -2.61 | -2.34 | -2.90 | -3.02 |
| $f_2/f$ | 15.51 | 970.05 | 15.06 | 315.25 | 223.86 |
| $f_3/f$ | 14.01 | 15.15 | 12.93 | 9.26 | 10.28 |
| $f_4/f$ | 1.28 | 1.34 | 1.30 | 1.14 | 1.24 |
| $f_5/f$ | 3.29 | 3.51 | 3.32 | -1.64 | -1.76 |
| $f_6/f$ | -2.51 | -2.48 | -2.44 | 3.02 | 3.28 |
| $f_7/f$ | 7.29 | 5.11 | 7.19 | 3.85 | 3.96 |
| $R_3/R_4$ | 1.54 | 1.60 | 1.53 | 1.63 | 1.67 |
| $\sum CT/TTL$ | 0.66 | 0.64 | 0.65 | 0.64 | 0.66 |
| Parameters and conditional expressions | Embodiment 11 | Embodiment 12 | Embodiment 13 | | |
| f(mm) | 2.88 | 2.49 | 2.60 | | |
| TTL(mm) | 20.22 | 18.82 | 23.82 | | |
| FNO | 1.80 | 1.80 | 1.80 | | |
| IH(mm) | 5.32 | 4.31 | 5.02 | | |
| EPD(mm) | 1.60 | 1.39 | 1.45 | | |
| FOV(°) | 190 | 160 | 180 | | |
| CRA(°) | 13.72 | 18.00 | 13.31 | | |
| TTL/f | 7.03 | 7.54 | 9.15 | | |
| IH/f | 1.85 | 1.73 | 1.93 | | |
| FOV/FNO | 105.56 | 88.89 | 100.00 | | |
| $f{\times}FOV/IH$(°) | 102.77 | 92.57 | 93.34 | | |
| $f_1/f$ | -2.51 | -2.84 | -3.33 | | |
| $f_2/f$ | 20.28 | 370.27 | -201.58 | | |
| $f_3/f$ | 11.06 | 7.07 | -3.57 | | |
| $f_4/f$ | 1.09 | 1.30 | 2.48 | | |
| $f_5/f$ | -2.09 | -1.63 | 1.33 | | |

(continued)

| Parameters and conditional expressions | Embodiment 11 | Embodiment 12 | Embodiment 13 | | |
|---|---|---|---|---|---|
| $f_6/f$ | 2.91 | 3.43 | -1.01 | | |
| $f_7/f$ | 4.77 | 3.81 | 2.04 | | |
| $R_3/R_4$ | 1.54 | 1.58 | 1.12 | | |
| $\sum CT/TTL$ | 0.66 | 0.63 | 0.65 | | |

In summary, the optical lens assembly of the embodiments of the present application achieves the effects of a large field of view, a large aperture, and miniaturization by reasonably matching the lens shapes and focal power combinations among various lenses,

In the description of this specification, references to terms such as "one embodiment", "some embodiments", "example", "specific example", or "some examples" indicate that the specific features, structures, materials or characteristics described in conjunction with that embodiment or example are included in at least one embodiment or example of the present application. In this specification, the illustrative expressions of the aforementioned terms do not necessarily refer to the same embodiment or example. Moreover, the specific features, structures, materials, or characteristics described may be combined in any suitable manner in any one or more embodiments or examples.

The embodiments described above merely express several implementation modes of the present application, and the description thereof is relatively specific and detailed. However, this should not be construed as a limitation to the scope of the patent application. It should be noted that, for those skilled in the art, several variations and improvements can be made without departing from the concept of the present application, which all fall within the protection scope of the present application. Therefore, the protection scope of the patent application should be determined by the appended claims.

## Claims

1. An optical lens assembly, comprising seven lenses, **characterized in that** the seven lenses arranged in sequence from an object side to an imaging surface along an optical axis are as follows:

   a first lens with a negative focal power, having an image-side surface being a concave surface;
   a second lens with a focal power, having an object-side surface being a convex surface and an image-side surface being a concave surface;
   a third lens with a focal power;
   a fourth lens with a positive focal power, having an object-side surface being a convex surface and an image-side surface being a convex surface;
   a fifth lens with a focal power;
   a sixth lens with a focal power; and
   a seventh lens with a positive focal power;
   wherein, an effective focal length f of the optical lens assembly and a focal length $f_2$ of the second lens satisfy: $14.0 < |f_2/f|$.

2. The optical lens assembly of claim 1, **characterized in that** a total optical length TTL and the effective focal length f of the optical lens assembly satisfy: $5.5 < TTL/f < 9.5$.

3. The optical lens assembly of claim 1, **characterized in that** the effective focal length f of the optical lens assembly and a real image height IH corresponding to a maximum field of view satisfy: $1.5 < IH/f < 2.0$.

4. The optical lens assembly of claim 1, **characterized in that** a maximum field of view FOV and an f-number FNO of the optical lens assembly satisfy: $80° < FOV/FNO < 110°$.

5. The optical lens assembly of claim 1, **characterized in that** the effective focal length f of the optical lens assembly, a maximum field of view FOV, and a real image height IH corresponding to the maximum field of view satisfy: $85° < f \times FOV/IH < 120°$.

6. The optical lens assembly of claim 1, **characterized in that** the effective focal length f of the optical lens assembly and a focal length $f_1$ of the first lens satisfy: $-3.5 < f_1/f < -2.0$.

7. The optical lens assembly of claim 1, **characterized in that** the effective focal length f of the optical lens assembly and a focal length $f_3$ of the third lens satisfy: $3.0 < |f_3/f| < 18.0$.

8. The optical lens assembly of claim 1, **characterized in that** the effective focal length f of the optical lens assembly and a focal length $f_4$ of the fourth lens satisfy: $0 < f_4/f < 2.5$.

9. The optical lens assembly of claim 1, **characterized in that** the effective focal length f of the optical lens assembly and a focal length $f_5$ of the fifth lens satisfy: $1.0 < |f_5/f| < 4.0$.

10. The optical lens assembly of claim 1, **characterized in that** the effective focal length f of the optical lens assembly and a focal length $f_6$ of the sixth lens satisfy: $|f_6/f| < 22.0$.

11. The optical lens assembly of claim 1, **characterized in that** the effective focal length f of the optical lens assembly and a focal length $f_7$ of the seventh lens satisfy: $1.8 < f_7/f < 8.0$.

12. The optical lens assembly of claim 1, **characterized in that** a radius of curvature $R_3$ of the object-side surface and a radius of curvature $R_4$ of the image-side surface of the second lens satisfy: $1.0 < R_3/R_4 < 1.8$.

13. The optical lens assembly of claim 1, **characterized in that** a total optical length TTL of the optical lens assembly and a sum $\Sigma CT$ of center thicknesses of the first to seventh lenses along the optical axis satisfy: $0.6 < \Sigma CT/TTL < 0.7$.

**FIG. 1**

**FIG. 2**

**FIG. 3**

**FIG. 4**

**FIG. 5**

**FIG. 6**

**FIG.7**

**FIG. 8**

**FIG. 9**

**FIG. 10**

**FIG. 11**

**FIG. 12**

**FIG. 13**

## INTERNATIONAL SEARCH REPORT

| | |
|---|---|
| International application No. | |
| | **PCT/CN2024/073334** |

**A. CLASSIFICATION OF SUBJECT MATTER**

G02B 9/64(2006.01)i

According to International Patent Classification (IPC) or to both national classification and IPC

**B. FIELDS SEARCHED**

Minimum documentation searched (classification system followed by classification symbols)

IPC: G02B9, G02B13

Documentation searched other than minimum documentation to the extent that such documents are included in the fields searched

Electronic data base consulted during the international search (name of data base and, where practicable, search terms used)

CNABS; CNTXT; VEN; WPABS; ENTXT; ENTXTC: 第一, 第1, 第七, 第7, 正, 负, 焦距, f2, 像高, IH, IH/F, imh/f, imgh/f, first+, 1st, senven+, 7th, negative

**C. DOCUMENTS CONSIDERED TO BE RELEVANT**

| Category* | Citation of document, with indication, where appropriate, of the relevant passages | Relevant to claim No. |
|---|---|---|
| PX | CN 115951482 A (JIANGXI LIANCHUANG ELECTRONICS CO., LTD.) 11 April 2023 (2023-04-11) description, paragraphs 82-181, and figures 1-24 | 1-13 |
| PX | CN 115951484 A (JIANGXI LIANCHUANG ELECTRONICS CO., LTD.) 11 April 2023 (2023-04-11) description, paragraphs 4-137, and figures 1-24 | 1-13 |
| PX | CN 115980984 A (JIANGXI LIANCHUANG ELECTRONICS CO., LTD.) 18 April 2023 (2023-04-18) description, paragraphs 80-169, and figures 1-24 | 1-13 |
| X | CN 106291882 A (ZHEJIANG SUNNY OPTICS CO., LTD.) 04 January 2017 (2017-01-04) description, paragraphs 186-195, and figures 36-40 | 1-13 |
| X | CN 114578524 A (JIANGXI LIANCHUANG ELECTRONICS CO., LTD.) 03 June 2022 (2022-06-03) description, paragraphs 85-95 and 107-116, and figures 15-21 and 29-35, and table 7 | 1-13 |
| X | CN 211506001 U (KINKO OPTICAL CO., LTD.) 15 September 2020 (2020-09-15) description, paragraphs 50-56, and figure 3 | 1-13 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 April 2024** | **26 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 682 607 A1**

## INTERNATIONAL SEARCH REPORT

<table>
<tr><td colspan="3"></td><td>International application No.<br>**PCT/CN2024/073334**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| X | CN 112230371 A (JIANGXI LIANYI OPTICAL CO., LTD.) 15 January 2021 (2021-01-15)<br>description, paragraphs 91-112 and 144, figures 1-5, and table 7 | 1, 3-13 |
| A | CN 115327746 A (JIANGXI LIANCHUANG ELECTRONICS CO., LTD.) 11 November 2022 (2022-11-11)<br>entire document | 1-13 |
| A | JP H1144843 A (ASAHI OPTICAL CO., LTD.) 16 February 1999 (1999-02-16)<br>entire document | 1-13 |

Form PCT/ISA/210 (second sheet) (July 2022)

## INTERNATIONAL SEARCH REPORT
### Information on patent family members

International application No.

**PCT/CN2024/073334**

| Patent document cited in search report | | | Publication date (day/month/year) | Patent family member(s) | | | Publication date (day/month/year) |
|---|---|---|---|---|---|---|---|
| CN | 115951482 | A | 11 April 2023 | None | | | |
| CN | 115951484 | A | 11 April 2023 | None | | | |
| CN | 115980984 | A | 18 April 2023 | None | | | |
| CN | 106291882 | A | 04 January 2017 | US | 2018314036 | A1 | 01 November 2018 |
| | | | | US | 10310226 | B2 | 04 June 2019 |
| | | | | WO | 2018045607 | A1 | 15 March 2018 |
| CN | 114578524 | A | 03 June 2022 | None | | | |
| CN | 211506001 | U | 15 September 2020 | None | | | |
| CN | 112230371 | A | 15 January 2021 | None | | | |
| CN | 115327746 | A | 11 November 2022 | None | | | |
| JP | H1144843 | A | 16 February 1999 | JP | 3793329 | B2 | 05 July 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023102460583